(19) Europäisches Patentamt

European Patent Office

Office européen des brevets

(11) EP 0 835 385 B1

(12) FASCICULE DE BREVET EUROPEEN

(45) Date de publication et mention
de la délivrance du brevet:
**12.04.2000 Bulletin 2000/15**

(21) Numéro de dépôt: **95922585.5**

(22) Date de dépôt: **08.06.1995**

(51) Int Cl.⁷: **F15C 1/22**, G01F 1/32

(86) Numéro de dépôt international:
**PCT/FR95/00754**

(87) Numéro de publication internationale:
**WO 95/35448 (28.12.1995 Gazette 1995/55)**

(54) **OSCILLATEUR FLUIDIQUE ET PROCEDE DE MESURE D'UNE QUANTITE VOLUMIQUE DE FLUIDE S'ECOULANT DANS UN TEL OSCILLATEUR FLUIDIQUE**

FLUIDISCHER OSZILLATOR UND VERFAHREN ZUR MESSUNG EINER VOLUMENMENGE EINES FLUIDES DAS EINEN SOLCHEN OSZILLATOR DURCHSTRÖMT

FLUIDIC OSCILLATOR AND METHOD FOR MEASURING THE VOLUME OF A FLUID FLOWING THERETHROUGH

(84) Etats contractants désignés:
**AT BE CH DE DK ES FR GB IT LI NL SE**

(30) Priorité: **17.06.1994 FR 9407487**

(43) Date de publication de la demande:
**15.04.1998 Bulletin 1998/16**

(73) Titulaire: **SCHLUMBERGER INDUSTRIES S.A.
92120 Montrouge (FR)**

(72) Inventeurs:
• **LIGNEUL, Patrice
F-92370 Chaville (FR)**

• **HOCQUET, Philippe
F-92170 Vanves (FR)**

(56) Documents cités:
**EP-A- 0 426 309          FR-A- 2 690 717
GB-A- 2 002 904          GB-A- 2 120 384**

• **MESURES-RéGULATION-AUTOMATISME,
vol.45, no.10, Octobre 1980, PARIS page 21 'Les débitmètres à ultrasons'**

EP 0 835 385 B1

## Description

La présente invention est relative à un oscillateur fluidique ainsi qu'à un procédé de mesure d'une quantité volumique de fluide s'écoulant dans ledit oscillateur fluidique.

Il est connu d'utiliser des oscillateurs fluidiques pour mesurer une quantité volumique d'un fluide telle que le débit si l'on mesure la fréquence des oscillations ou le volume, si l'on compte les oscillations.

Un tel oscillateur fluidique est par exemple décrit dans la demande de brevet français N°9205301 déposée par la Demanderesse et est basé sur la détection de la fréquence d'oscillation d'un jet de fluide bidimensionnel dans une chambre d'oscillation.

Le jet de fluide est formé au passage de l'écoulement du fluide par une fente qui débouche dans la chambre d'oscillation et oscille transversalement par rapport au plan de symétrie longitudinal de l'oscillateur fluidique.

Un obstacle est disposé dans la chambre d'oscillation et possède dans sa partie frontale, une cavité placée sur le parcours du jet de fluide de manière à ce que ledit jet balaye les parois de la cavité au cours de son oscillation. Une mesure de débit est par exemple effectuée en détectant le balayage du fond de la cavité par le jet au cours de son oscillation, la fréquence d'oscillation du jet étant proportionnelle au débit du fluide.

On connaît également d'après la demande de brevet GB 2120384A un oscillateur fluidique dont le principe de fonctionnement est quelque peu différent puisqu'il s'agit d'un oscillateur à effet Coanda mais dont la finalité reste la mesure d'une quantité volumique de fluide par détection de la fréquence d'oscillation d'un jet de fluide. Cet oscillateur fluidique comprend trois obstacles logés dans une chambre d'oscillation, deux sont situés de part et d'autre du plan de symétrie longitudinal immédiatement en aval de l'ouverture d'entrée du fluide dans ladite chambre et forment avec les parois latérales de la chambre d'oscillation deux canaux symétriques, et un troisième obstacle est disposé en regard de l'ouverture d'entrée du fluide en aval des deux premiers obstacles latéraux.

Lors de son mouvement de balayage, le jet de fluide rencontre l'un des obstacles latéraux, et se colle à celui-ci, l'écoulement de fluide remonte alors vers l'amont en empruntant le canal formé par ledit obstacle et l'une des parois de la chambre d'oscillation créant par là même une recirculation de fluide.

Lorsque l'écoulement du fluide atteint la zone amont située près de l'ouverture d'entrée du fluide où se situe la base du jet de fluide, ledit écoulement provoque alors le basculement dudit jet en direction de l'autre obstacle latéral et le même phénomène se reproduit avec cet autre obstacle latéral. L'oscillateur fluidique comprend également deux transducteurs ultrasonores disposés de part et d'autre d'une portion de l'écoulement de fluide de manière à ce que les signaux ultrasonores soient émis et reçus dans des plans sensiblement transversaux à la direction longitudinale d'écoulement du fluide.

Selon la méthode de mesure décrite, l'un des transducteurs émet en direction de l'autre transducteur placé en aval du premier ou dans le même plan transversal que celui-ci un signal ultrasonore qui est modulé par les oscillations du jet de fluide dans la chambre d'oscillation et l'autre transducteur reçoit ledit signal ultrasonore ainsi modulé.

A partir du signal reçu, il est alors possible de détecter la fréquence f d'oscillation du jet de fluide et d'en déduire le débit ou le volume du fluide s'écoulant dans l'oscillateur fluidique.

Ainsi, il est expliqué dans cette demande de brevet britannique que le signal reçu est démodulé et transformé ensuite en signal impulsionnel où chaque impulsion correspond à un volume unitaire de fluide balayé par le jet de fluide au cours de son oscillation.

Cette technique de mesure offre l'avantage d'obtenir une bonne répétabilité des mesures sur la gamme usuelle de débits d'un oscillateur fluidique. Toutefois, dans certains cas, il est nécessaire d'obtenir une très bonne précision dans la mesure du débit ou du volume et, par conséquent, il peut être utile de disposer d'un oscillateur fluidique dont la sensibilité peut être aisément améliorée sur sa gamme usuelle de débits.

En outre, il est connu qu'un oscillateur fluidique ne peut mesurer une quantité volumique de fluide lorsque le débit de fluide est si faible que l'on ne peut détecter la fréquence des oscillations du jet de fluide.

Dans les installations domestiques, il est d'ailleurs connu que les débits de fluide et par exemple de gaz ont, la majeure partie du temps, une faible valeur qui est typiquement inférieure à 200 l/h. Il est donc particulièrement important de pouvoir mesurer un tel débit en plus des valeurs maximales de débit qui peuvent survenir occasionnellement. Par ailleurs, il est également nécessaire de pouvoir détecter les fuites de fluide lorsqu'elles se produisent et donc il faut pouvoir distinguer un débit de fuite d'un faible débit.

La présente invention vise à remédier aux inconvénients de l'art antérieur en proposant une structure d'oscillateur fluidique qui puisse facilement s'adapter à une mesure plus précise d'une quantité volumique de fluide sur la gamme usuelle de débits dudit oscillateur fluidique lorsque cela s'avère nécessaire et qui soit également facilement adaptable à la mesure d'une faible quantité volumique de fluide pour laquelle les oscillations du jet de fluide disparaissent.

La présente invention propose par ailleurs un procédé de mesure adapté à la mesure d'une quantité volumique de fluide dans chacun des cas précités.

La présente invention a ainsi pour objet un oscillateur fluidique symétrique par rapport à un plan de symétrie longitudinal comprenant :

- des moyens pour engendrer un jet de fluide bidimensionnel oscillant transversalement par rapport audit plan de symétrie longitudinal,

- deux transducteurs ultrasonores,
- des moyens pour, d'une part, générer à partir de l'un desdits transducteurs un signal ultrasonore dans l'écoulement de fluide en direction de l'autre transducteur et, d'autre part, recevoir ledit signal ultrasonore modulé par les oscillations du jet de fluide,
- et des moyens pour traiter le signal reçu afin de déterminer une quantité volumique de fluide écoulée dans ledit oscillateur fluidique, caractérisé en ce que les transducteurs ultrasonores sont sensiblement alignés suivant le plan de symétrie longitudinal.

Cette nouvelle disposition des transducteurs ultrasonores dans un oscillateur fluidique est très avantageuse puisque, d'une part, en choisissant le positionnement desdits transducteurs précisément dans le plan de symétrie ou de manière légèrement décalée par rapport à ce plan, il est possible de favoriser la détection de la fréquence d'oscillation du jet ou de la fréquence double et donc, dans ce dernier cas, d'augmenter la sensibilité dudit oscillateur fluidique et, d'autre part, en utilisant les mêmes transducteurs ainsi positionnés dans l'un ou l'autre cas, on peut déterminer les faibles quantités volumiques de fluide pour lesquelles les oscillations du jet de fluide sont trop faibles pour pouvoir en détecter la fréquence.

L'oscillateur fluidique ainsi obtenu est appelé oscillateur combiné et couvre une gamme de débits plus étendue que la gamme usuelle de débits d'un oscillateur fluidique classique.

A cet effet, il est prévu que l'oscillateur fluidique comporte

- des moyens pour émettre et recevoir alternativement un signal ultrasonore à partir de chacun des transducteurs ultrasonores,
- des moyens pour déterminer, à partir de chaque signal ultrasonore reçu et pour deux signaux ultrasonores consécutifs, une valeur d'une grandeur caractéristique de la vitesse de propagation dudit signal ultrasonore modifiée par l'écoulement de fluide et pour en déduire la quantité volumique de fluide écoulée dans ledit oscillateur fluidique. Les transducteurs ultrasonores sont disposés dans des plans transversaux différents, l'un desdits transducteurs étant dit amont et étant disposé en amont des moyens pour engendrer le jet de fluide bidimensionnel, l'autre transducteur étant dit aval.

Etant donné que le phénomène d'oscillation du jet de fluide s'observe sur une large gamme de débits couvrant les valeurs supérieures du débit, la gamme de débits pour laquelle les oscillations du jet de fluide sont trop faibles pour pouvoir être détectées est relativement peu étendue.
Par conséquent, sur cette gamme restreinte, il est possible d'utiliser des transducteurs très résonnants et donc de conception relativement simple.

La grandeur caractéristique de la vitesse de propagation du signal ultrasonore est par exemple le temps de propagation dudit signal. Cette grandeur peut être également la phase de ce signal.
Selon un mode de réalisation de l'invention, l'oscillateur fluidique comprend

- des moyens pour engendrer un jet de fluide bidimensionnel oscillant qui sont formés par une ouverture d'entrée du fluide de dimension transversale ou largeur d et de hauteur h
- une chambre d'oscillation raccordée, par une de ses extrémités, à ladite ouverture d'entrée du fluide et, par l'extrémité opposée, à une ouverture de sortie du fluide, lesdites ouvertures étant alignées suivant ledit plan de symétrie longitudinal,
- au moins un obstacle disposé dans ladite chambre d'oscillation entre les deux ouvertures d'entrée et de sortie du fluide.

Selon d'autres caractéristiques de l'oscillateur fluidique:

- le transducteur amont est disposé en amont de l'ouverture d'entrée du fluide,
- l'obstacle présente une partie frontale dans laquelle est pratiquée une cavité en regard de l'ouverture d'entrée du fluide,
- le transducteur aval est assujetti à l'obstacle,
- le transducteur aval est disposé dans la cavité de l'obstacle.

Selon d'autres caractéristiques de l'invention:

- en amont de l'obstacle, un passage pour le fluide est délimité par deux parois perpendiculaires au plan de symétrie longitudinal P et séparées d'une distance h,
- en amont de l'ouverture d'entrée du fluide, un canal de direction longitudinale forme au moins une partie du passage pour le fluide, ledit canal ayant une largeur perpendiculaire à la distance h sensiblement constante et égale à d.
- le canal possède, à une de ses extrémités, une ouverture dite aval correspondant à l'ouverture d'entrée du fluide et, à son extrémité opposée, une ouverture dite amont qui présente, dans un plan parallèle à la direction de l'écoulement du fluide et perpendiculaire au plan, une forme de convergent de largeur se réduisant progressivement à la largeur d,
- le transducteur amont est disposé en amont du canal,
- deux arrivées de fluide symétriques par rapport au plan de symétrie longitudinal débouchent dans le passage, en amont du canal,
- deux passages latéraux de direction générale parallèle au plan de symétrie longitudinal et perpendiculaire à la direction longitudinale du canal constituent chacun une arrivée de fluide, chacun desdits passages étant relié, d'une part, par une extrémité à une même première chambre perpendiculaire audit plan et, d'autre part, par une extrémité opposée à une même deuxième chambre parallèle à ladite première chambre, ladite première chambre étant pourvue d'une amenée de fluide,

- un espace libre formant une autre partie du passage pour le fluide est aménagé en amont du canal et les deux arrivées de fluide débouchent dans ledit espace libre,
- le transducteur amont est disposé en amont de l'espace libre,
- les transducteurs ultrasonores sont situés à la même côte le long d'une direction perpendiculaire à la direction longitudinale de l'écoulement de fluide et contenue dans le plan de symétrie longitudinal,
- les transducteurs ultrasonores sont tous deux assujettis à une seule des parois délimitant le passage pour le fluide,
- les transducteurs ultrasonores sont décalés dans une direction perpendiculaire à la direction longitudinale de l'écoulement de fluide et contenue dans le plan de symétrie longitudinal,
- chaque transducteur ultrasonore est respectivement assujetti à l'une des parois délimitant le passage pour le fluide.

L'invention a également pour objet un procédé de mesure d'une quantité volumique de fluide s'écoulant dans l'oscillateur fluidique précédemment décrit, dans lequel un jet de fluide oscille transversalement par rapport à un plan de symétrie longitudinal, ledit procédé consistant successivement à:

- émettre un signal ultrasonore dans l'écoulement de fluide à partir d'un transducteur ultrasonore,
- recevoir ledit signal ultrasonore modulé par les oscillations du jet de fluide avec un autre transducteur ultrasonore,
- et traiter le signal reçu afin de déterminer ladite quantité volumique de fluide écoulée, caractérisé en ce que ledit procédé consister à émettre le signal ultrasonore dans une direction sensiblement contenue dans le plan de symétrie longitudinal.

Avantageusement, en alignant précisément les transducteurs ultrasonores dans le plan de symétrie longitudinal de l'oscillateur fluidique et en émettant un signal ultrasonore dans ce plan, et dans le sens d'écoulement du fluide, ledit signal ultrasonore qui est modulé par les oscillations du jet de fluide et recueilli dans ledit plan de symétrie longitudinal est principalement affecté par la fréquence 2f où f représente la fréquence d'oscillation dudit jet de fluide. La détection de cette fréquence 2f permet donc de doubler la sensibilité de l'oscillateur fluidique sur sa gamme usuelle de débits, c'est à dire aux débits pour lesquels les oscillations du jet de fluide sont détectables. Cette fréquence 2f ne peut être détectée selon l'enseignement technique de la demande de brevet GB 2120384 A.

Par contre, lorsque l'on veut utiliser l'oscillateur fluidique combiné pour couvrir la gamme de débits la plus étendue possible sans chercher à améliorer la sensibilité dudit oscillateur, il n'est pas nécessaire de positionner précisément les transducteurs ultrasonores dans le plan de symétrie longitudinal. Les transducteurs ultrasonores sont alors sensiblement alignés suivant le plan de symétrie longitudinal de telle manière qu'ils présentent une inclinaison de 1 à 2° par rapport à la direction longitudinale dudit plan de symétrie.

Compte tenu de cette disposition des transducteurs, pour mesurer une quantité volumique de fluide à haut débit, c'est-à-dire quand les oscillations du jet de fluide sont suffisamment fortes pour que l'on puisse en détecter la fréquence, on peut émettre un signal ultrasonore dans le sens d'écoulement du fluide dans l'oscillateur fluidique.
Le signal ultrasonore modulé par le oscillations du jet de fluide qui est recueilli est alors affecté principalement par la fréquence f d'oscillation dudit jet de fluide.
Suivant cette disposition des transducteurs, on émet préférentiellement un signal ultrasonore en sens inverse de l'écoulement du fluide dans l'oscillateur fluidique ce qui a pour but de favoriser davantage la détection de la fréquence f d'oscillation que lorsque le signal ultrasonore se propage dans le même sens que l'écoulement du fluide. A l'aide de cette disposition avantageuse des transducteurs on peut aussi mesurer une quantité volumique de fluide à faible débit, c'est-à-dire lorsque les oscillations du jet de fluide sont trop faibles pour pouvoir être détectées et le procédé conforme à l'invention consiste alors successivement à:

- émettre un signal ultrasonore d'un transducteur vers l'autre dans une direction sensiblement contenue dans le plan de symétrie longitudinal,
- recevoir ledit signal ultrasonore dont la vitesse de propagation a été modifiée par l'écoulement de fluide,
- déterminer une première valeur d'une grandeur caractéristique de ladite vitesse de propagation du signal ultrasonore reçu,
- répéter les étapes précédentes en inversant le rôle d'émetteur et de récepteur des transducteurs ultrasonores et déterminer une seconde valeur de ladite grandeur caractéristique de la vitesse de propagation du signal ultrasonore,
- et en déduire la mesure d'une faible quantité volumique de fluide.

L'invention trouve une application particulièrement intéressante dans le domaine du comptage de gaz.
D'autres caractéristiques et avantages ressortiront de la description qui va suivre donnée à titre d'exemple illustratif et non limitatif et faite en référence aux dessins annexés, sur lesquels:

- la figure 1 est une vue schématique en coupe longitudinale suivant le plan de symétrie longitudinal P d'un mode de réalisation de l'oscillateur fluidique selon l'invention,
- la figure 2 est une vue schématique de l'oscillateur fluidique de la figure 1 suivant le plan P1,
- la figure 3 est une vue schématique partielle en coupe suivant A du mode de réalisation de l'oscillateur fluidique représenté à la figure 1,
- la figure 4 est une vue schématique d'une variante de réalisation suivant le plan P1 de l'oscillateur fluidique représenté à la figure 2,
- la figure 5 est une première variante de réalisation de la disposition des transducteurs ultrasonores représentée à la figure 1,
- la figure 6 est une deuxième variante de réalisation de la disposition des transducteurs ultrasonores représentée à la figure 1,
- la figure 7 est une troisième variante de réalisation de la disposition des transducteurs ultrasonores représentée à la figure 1,
- la figure 8 est une quatrième variante de réalisation de la disposition des transducteurs ultrasonores représentée à la figure 1,
- la figure 9 est une vue schématique suivant le plan P1 de la figure 1 d'un second mode de réalisation d'un oscillateur fluidique selon l'invention,
- la figure 10 est une vue schématique partielle du circuit électronique utilisé pour la mesure du volume de gaz s'écoulant dans l'oscillateur fluidique,
- la figure 11 est une vue détaillée et agrandie du bloc électronique 100 de la figure 10,
- la figure 12 représente un signal ultrasonore modulé et amplifié par l'amplificateur 102 de la figure 11,
- la figure 13 représente le signal ultrasonore de la figure 12 après redressement par le circuit 104 de la figure 11,
- la figure 14 représente le signal ultrasonore de la figure 13 après filtrage par le bloc électronique 106 de la figure 11,
- la figure 15 représente le signal ultrasonore de la figure 14 après passage dans le bloc électronique d'amplification 108 et dans le bloc électronique 112 de détection de crête,
- la figure 16 montre l'opération effectuée par le bloc électronique 112 de détection de crête sur une crête,
- la figure 17 est une courbe de calibration de l'oscillateur fluidique selon l'invention.

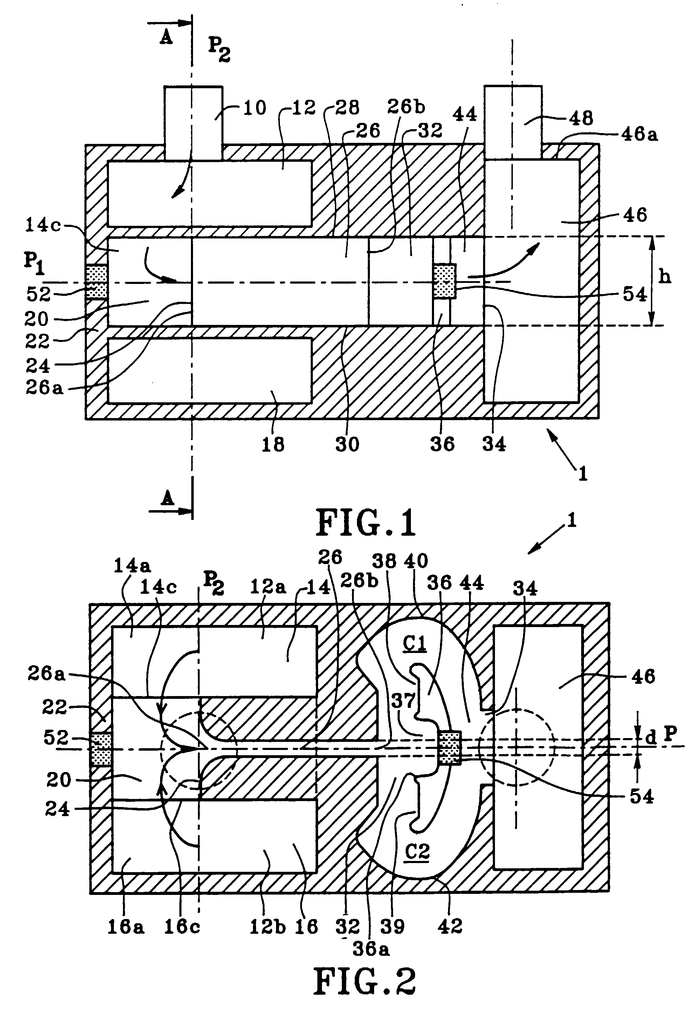

Comme représenté aux figures 1 et 2 et désigné dans son ensemble par la référence 1, l'oscillateur fluidique selon l'invention s'applique par exemple au comptage domestique de gaz et possède un plan de symétrie longitudinal P qui est disposé verticalement et qui correspond au plan de la figure 1.

Il convient de remarquer que l'oscillateur fluidique peut également fonctionner dans une position telle que le plan P soit à l'horizontale ou même dans une autre position sans pour cela perturber la mesure de la quantité volumique de fluide (débit ou volume).
Le fluide en écoulement dans cet oscillateur fluidique est un gaz mais il peut également s'agir d'un liquide tel que de l'eau.

L'oscillateur fluidique représenté à la figure 1 comporte une amenée de gaz 10 verticale centrée par rapport au plan de symétrie longitudinal P et débouchant dans une première chambre 12 horizontale dite chambre supérieure de grandes dimensions disposée symétriquement par rapport audit plan P. Cette chambre supérieure 12 possède une section de passage de forme rectangulaire qui est parallèle au plan de symétrie longitudinal P et offre à l'écoulement de gaz qui débouche par l'amenée 10 une augmentation de section brutale par exemple égale à un rapport 4 afin de détruire la structure tourbillonnaire de l'écoulement en réduisant sa vitesse.

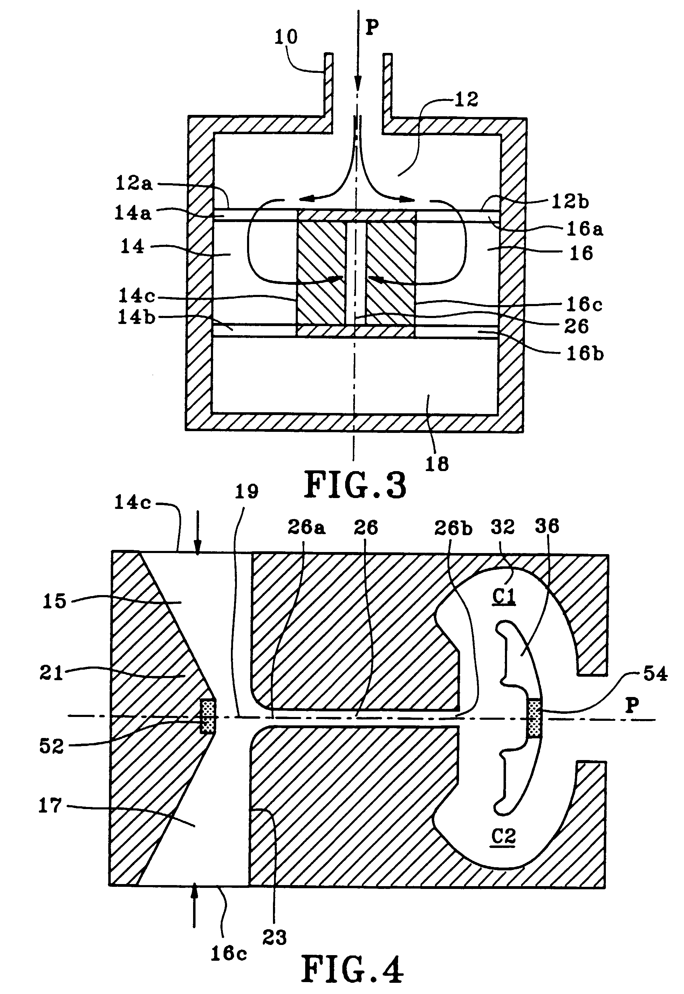

La chambre supérieure 12 possède deux ouvertures opposées dites d'extrémités 12a, 12b qui débouchent chacune, ainsi que représenté aux figures 2 et 3, dans un passage latéral vertical 14 ou 16 de section de passage rectangulaire et identique à la section de passage de ladite première chambre 1.
Les deux passages latéraux verticaux 14 et 16 sont symétriques l'un de l'autre par rapport au plan de symétrie longitudinal P.
Chaque passage latéral 14 (resp. 16) est en communication, d'une part, à une de ses extrémités dite supérieure 14a (resp. 16a) confondue avec l'extrémité 12a (resp. 12b) avec la première chambre supérieure 12 et, d'autre part, à son extrémité opposée dite inférieure 14b (resp. 16b) avec une seconde chambre 18 dite inférieure identique à la première chambre 12 ainsi que représenté sur la figure 1.
Ces deux chambres supérieure 12 et inférieure 18 sont symétriques l'une de l'autre par rapport au plan P1 représenté sur la figure 1 et parallèles entre elles, mais il est également possible de réduire le volume de la chambre inférieure 18.

Chacun des deux passages latéraux verticaux 14, 16 constitue une arrivée de gaz et comporte une ouverture latérale médiane 14c, 16c de section de passage parallèle au plan de symétrie longitudinal P (fig. 2).
Les deux arrivées de gaz 14, 16 débouchent toutes deux par l'intermédiaire de leurs ouvertures latérales 14c, 16c dans un espace libre 20 situé à mi-parcours entre les deux chambres inférieure 18 et supérieure 12.
L'espace libre 20 qui forme une chambre intermédiaire de plus petites dimensions que la chambre 12 possède une plus grande dimension dite transversale qui est perpendiculaire au plan de symétrie longitudinal P et est délimité le long de cette dimension, d'une part, vers l'amont par une paroi d'extrémité dite amont 22 et , d'autre part, vers l'aval par une paroi dite aval 24. Les deux parois 22 et 24 sont espacées l'une de l'autre d'une distance qui correspond à la dimension longitudinale des ouvertures latérales 14c et 16c. Un canal 26 aligné suivant le plan de symétrie longitudinal P est aménagé dans la paroi aval 24. Ce canal 26 appelé canal principal a une dimension transversale d, encore appelée largeur du canal, qui est sensiblement constante sur toute sa dimension longitudinale, encore appelée longueur du canal. La longueur du canal est de préférence supérieure à 10d afin d'obtenir une bonne précision sur la mesure de la quantité volumique de gaz aux faibles débits, c'est à dire lorsque les oscillations du jet de gaz sont trop faibles pour pouvoir en détecter la fréquence.

L'ouverture amont 26a du canal principal 26 possède une forme de convergent dans le plan P1 (figure 2). Chaque partie de l'ouverture amont 26a qui est placée d'un côté ou de l'autre du plan P présente un profil convexe et par exemple sensiblement arrondi contribuant ainsi à réduire progressivement la largeur de ladite ouverture jusqu'à la largeur d du canal principal 26.

Selon une variante de l'invention représentée à la figure 4, les arrivées de gaz ou passages latéraux verticaux 14, 16 non représentés sur cette figure, débouchent chacune dans un canal horizontal 15, 17, dit d'arrivée de gaz par l'intermédiaire des ouvertures latérales 14c, 16c.

Chaque canal horizontal a une section de passage qui se réduit progressivement. Les deux canaux d'arrivée de gaz 15 et 17 sont symétriques par rapport au plan P et se rejoignent dans une zone 19 située dans ledit plan P immédiatement en amont de l'ouverture amont 26a du canal principal. Ces canaux sont délimités, d'une part, vers l'amont, par une paroi d'extrémité dite amont 21 qui fait saillie vers l'aval et, d'autre part, vers l'aval, par une paroi d'extrémité dite aval 23.

Comme précédemment décrit, un canal principal 26 aligné suivant le plan de symétrie longitudinal P est aménagé dans la paroi aval. Les canaux d'arrivée de gaz 15 et 17 et le canal principal 26 forment ainsi un passage horizontal pour le gaz qui est délimité en partie haute par une paroi dite supérieure et en partie basse par une paroi dite inférieure non représentées dans le plan de la figure 4 et toutes deux espacées d'une hauteur égale à h.

L'oscillateur fluidique représenté aux figures 1 et 2 comprend des moyens pour engendrer un jet de gaz bidimensionnel oscillant transversalement par rapport au plan de symétrie longitudinal P.

Ces moyens sont formés par une ouverture d'entrée du gaz dans une chambre dite d'oscillation 32 qui est confondue avec l'ouverture aval 26b du canal principal et possède une forme rectangulaire. La chambre d'oscillation 32 est raccordée par une de ses extrémités à l'ouverture aval 26b du canal principal 26 et, par son extrémité opposée, à une ouverture de sortie du gaz 34 dont la largeur est supérieure à d. Les ouvertures d'entrée 26b et de sortie du gaz 34 sont alignées suivant le plan P.

L'oscillateur fluidique comprend également un obstacle 36 de hauteur h disposé au centre de la chambre d'oscillation 32 entre les deux ouvertures d'entrée 26b et de sortie du gaz 34. Un passage horizontal pour le gaz situé en amont de l'obstacle 36 est formé en partie par l'espace libre 20 et le canal 26 et est délimité en partie haute par une paroi dite supérieure 28 et en partie basse par une paroi dite inférieure 30 (figure 1). Ces deux parois 28 et 30 sont séparées l'une de l'autre d'une hauteur égale à h. Un tel obstacle 36 a déjà été décrit dans la demande de brevet français n°9205301. Cet obstacle 36 présente une partie frontale 36a dans laquelle est pratiquée une cavité 37, appelée cavité centrale, située en regard de l'ouverture d'entrée 26b de la chambre d'oscillation 32.

Deux cavités secondaires 38 et 39 sont également prévues dans la partie frontale 36a de l'obstacle 36 symétriquement par rapport au plan P. La chambre d'oscillation 32 possède des parois latérales 40 et 42 dont la forme épouse sensiblement le profil extérieur de l'obstacle 36 et ménagent ainsi avec ledit obstacle deux canaux symétriques secondaires C1 et C2, situés de part et d'autre du plan de symétrie longitudinal P.

Ces canaux secondaires C1 et C2 ont une largeur sensiblement constante, ce qui permet de ne pas perturber l'écoulement du gaz. Les canaux secondaires C1 et C2 contournent l'obstacle 36 et se rejoignent en aval de celui-ci dans une zone 44 située immédiatement en amont de l'ouverture de sortie 34 de la chambre d'oscillation 32. Cette ouverture de sortie 34 débouche dans un passage vertical 36, à mi-hauteur de celui-ci, ainsi que représenté sur la figure 1. Ce passage vertical 46 est par exemple symétrique par rapport au plan de symétrie longitudinal P et comporte à une de ses extrémités dite supérieure 46a une sortie de gaz 48 verticale centrée par rapport audit plan P.

Cette configuration décrite en référence aux figures 1 à 3 présente l'avantage de conférer à l'oscillateur fluidique une compacité satisfaisante.

On va maintenant décrire la circulation de l'écoulement de gaz dans l'oscillateur fluidique. L'écoulement de gaz vertical est introduit dans l'oscillateur fluidique par l'amenée verticale 10 et débouche dans la chambre supérieure 12 dudit oscillateur fluidique où il se partage en deux parties.

Les deux parties de l'écoulement dit principal s'écoulent horizontalement dans la chambre supérieure 12 de l'oscillateur fluidique en sens opposé l'une de l'autre, dans une direction perpendiculaire au plan de symétrie longitudinal P. Chaque partie de l'écoulement telle que représentée sur la figure 3 emprunte une ouverture d'extrémité 12a (resp. 12a) de la chambre supérieure 12 de l'oscillateur fluidique, débouche dans un des passages latéraux verticaux 14 (resp. 16) et effectue un mouvement de rotation avant de s'engouffrer dans l'espace libre 20 par une des ouvertures latérales 14c(resp. 16c). Une telle configuration a été conçue afin de permettre au gaz de se débarrasser des diverses particules polluantes dont il est chargé (poussières ... ) lors de la traversée des passages latéraux verticaux 14, 16 où, sous l'effet de la gravité et du mouvement de rotation de l'écoulement, lesdites particules sont dirigées vers la chambre inférieure 18 de l'oscillateur fluidique.

Lorsque les deux parties de l'écoulement du gaz débouchent symétriquement par rapport au plan P dans l'espace libre 20, elles s'y rejoignent au droit dudit plan P et s'engouffrent dans le canal principal 26 par son ouverture amont 26a.

L'écoulement de gaz emprunte alors le canal principal 26 et se transforme en jet bidimensionnel oscillant à son ouverture aval 26b.

Dans la chambre d'oscillation 32, l'écoulement de gaz emprunte alternativement le canal C1 ou le canal C2 pour rejoindre l'ouverture de sortie 34 et ensuite remonter par le passage vertical 46 en direction de la sortie de gaz verticale 48.

Compte tenu du fait que le passage vertical 46 s'étend verticalement jusqu'en dessous du niveau où se situe la chambre d'oscillation 32, cela permet également de débarrasser le gaz de certaines particules polluantes qui n'auraient pas été éliminées précédemment.

Comme mentionné précédemment, l'oscillateur fluidique peut être placé dans une autre position pour laquelle il n'est pas nécessaire de disposer d'une chambre inférieure 18 servant au dépoussiérage du gaz.

Conformément à l'invention, l'oscillateur fluidique comprend deux transducteurs ultrasonores 52, 54 sensiblement alignés suivant le plan de symétrie longitudinal.

Le fait que le gaz soit débarassé d'une grande partie de ses particules polluantes permet de ne pas contaminer les transducteurs et ainsi de prolonger leur durée de vie.

Selon le mode de réalisation de l'invention représenté aux figures 1 à 3, les transducteurs ultrasonores 52 et 54 présentent un décalage angulaire d'environ 1,5° avec le plan de symétrie longitudinal P, afin de recueillir principalement la fréquence f d'oscillation du jet de gaz dans le signal ultrasonore modulé par les oscillations dudit jet de gaz.

Ce décalage angulaire permet en effet de distinguer dans le signal ultrasonore modulé la fréquence f de la fréquence 2f. Si le décalage angulaire dépasse 2°, il risque de se produire dans le canal principal 26 des réflexions multiples des signaux ultrasonores qui affectent la qualité du signal et notamment diminuent le rapport signal/bruit.

Dans l'éventualité où l'on souhaite améliorer la sensibilité de l'oscillateur fluidique sur sa gamme usuelle de débits s'étendant par exemple de 100 l/h à 6000 l/h, il est nécessaire de disposer les transducteurs ultrasonores de manière très précise dans le plan de symétrie longitudinal P et il est alors préférable d'émettre un signal ultrasonore de l'amont vers l'aval afin de favoriser la détection de la fréquence 2f.

Ainsi que représenté sur les figures 1 et 2, les transducteurs ultrasonores 52 et 54 sont disposés face à face dans des plans transversaux différents. On entend par plan transversal un plan perpendiculaire au plan de symétrie longitudinal P et à la direction d'écoulement du gaz. En effet, si l'on dispose les transducteurs ultrasonores dans un même plan transversal comme dans l'art antérieur, ceux-ci ne sont pas aptes à mesurer une quantité volumique de gaz aux faibles débits car les signaux ultrasonores émis ne peuvent pas recueillir d'informations sur la vitesse de l'écoulement du gaz. Le transducteur amont 52 est situé en amont de l'ouverture d'entrée 26b et, plus précisément, en amont de l'espace libre 20.

Comme représenté sur les figures 1 et 2, le transducteur amont 52 est logé dans la paroi d'extrémité amont 22 et est ainsi protégé vis à vis de l'écoulement de gaz. Le transducteur aval 54 est assujetti à l'obstacle 36 et, plus précisément, il est disposé dans la cavité principale 37 dudit obstacle.

Comme représenté sur la variante de réalisation de la figure 4, le transducteur amont 52 est disposé dans la partie médiane de la paroi d'extrémité amont 21, c'est-à-dire dans la partie la plus proche du canal principal 26, alors que le transducteur aval 54 est assujetti à l'obstacle 36 tel que décrit précédemment.

Dans l'exemple de réalisation décrit en référence aux figures 1 et 2, les transducteurs amont 52 et aval 54 sont situés à une même hauteur par rapport à la hauteur h du canal 26 de l'oscillateur fluidique.

Selon une variante de l'invention, les transducteurs ultrasonores amont et aval peuvent également être situés à une hauteur différente par rapport à la hauteur h du canal 26 de l'oscillateur fluidique mais ils sont toujours face à face.

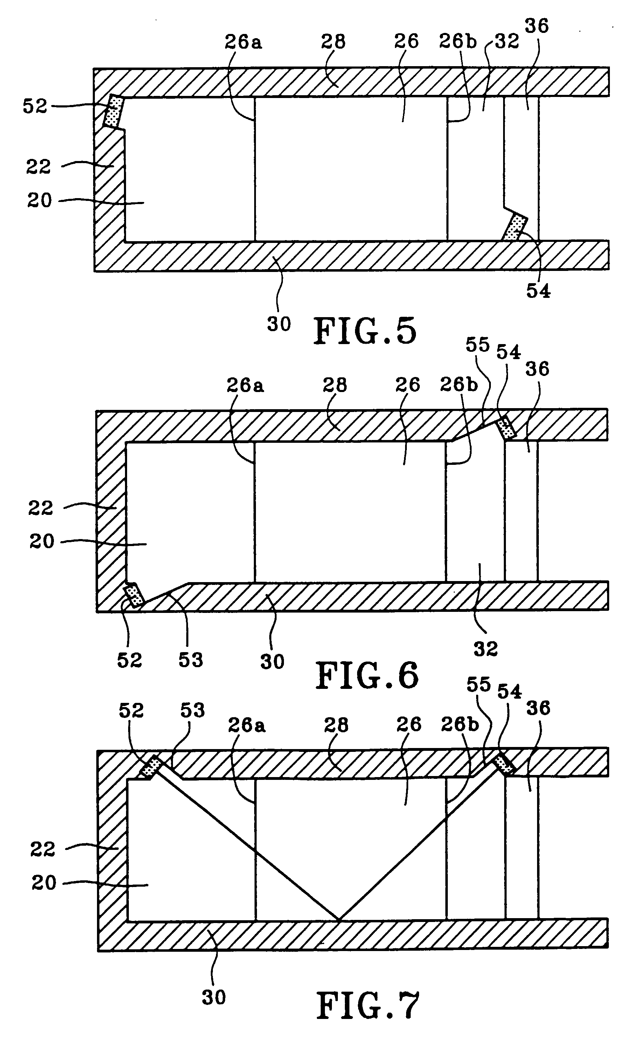

Ainsi que représenté par exemple à la figure 5, la différence de hauteur entre les transducteurs ultrasonores amont et aval est sensiblement égale à h.

Selon une autre variante de l'invention représentée à la figure 6, les transducteurs ultrasonores amont 52 et aval 54 sont également situés à des hauteurs différentes mais le transducteur amont 52 est monté au fond d'un logement 53 aménagé dans la paroi inférieure 30 de l'oscillateur fluidique, en dessous de l'espace libre 20.

Le transducteur aval 54, quant à lui, est monté au fond d'un logement 54 aménagé dans la paroi supérieure 28 de l'oscillateur fluidique sensiblement au droit de l'obstacle 36. Les transducteurs amont et aval sont disposés face à face.

Selon encore une autre variante représentée à la figure 7, les transducteurs ultrasonores amont 52 et aval 54 sont situés à la même hauteur et ne sont plus disposés face à face. Les transducteurs sont respectivement montés chacun dans un logement 53, 55 qui est aménagé dans la paroi supérieure 28 de l'oscillateur fluidique. Le transducteur aval 54 est sensiblement situé au dessus de l'obstacle 36 et le logement 55 dans lequel il est monté ne rencontre pas le canal 26 afin de ne pas perturber la formation du jet de gaz.

En outre, le transducteur aval 54 doit être placé en aval du canal 26 afin que les signaux ultrasonores puissent être suffisamment modulés par les oscillations du jet de gaz.

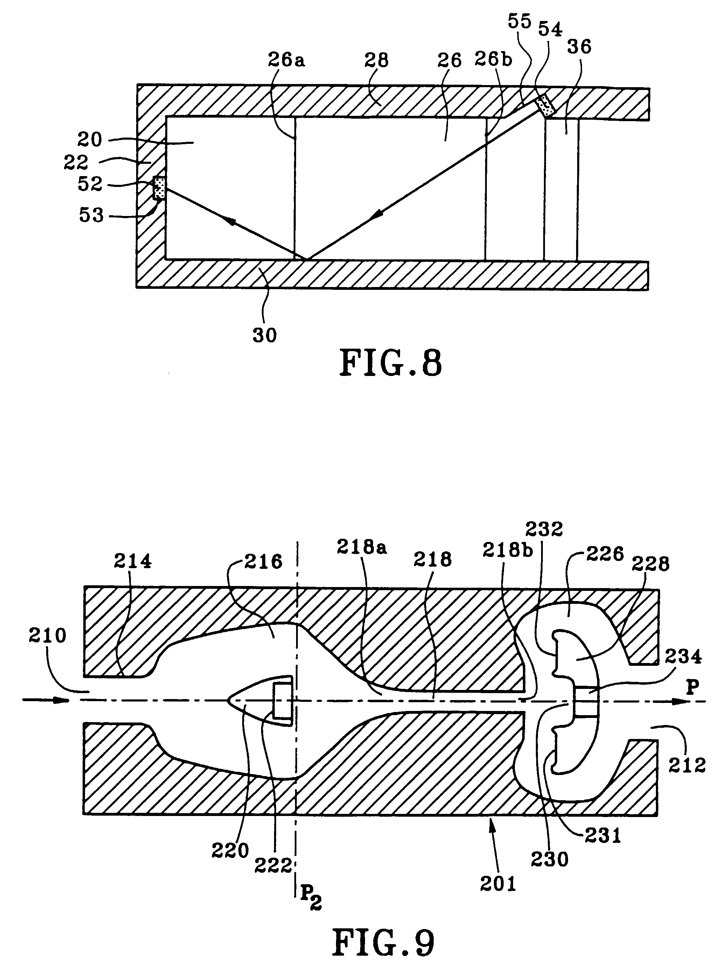

Ainsi, le trajet des signaux ultrasonores dans le plan de symétrie longitudinal P a une forme de V. La variante représentée à la figure 8 permet également d'obtenir un trajet des signaux ultrasonores en forme de V dans le plan de symétrie longitudinal P mais en disposant les transducteurs ultrasonores à des hauteurs différentes. Toutefois, le transducteur amont 52 est monté dans un logement aménagé dans la paroi d'extrémité 22 de manière à faire face à l'obstacle 36. Le transducteur aval, quant à lui, est toujours disposé de la même manière que celle décrite en référence à la figure 7.

Il convient de remarquer qu'en disposant le transducteur aval 54 au dessus ou en dessous de l'obstacle 36, l'oscillation du jet de gaz est moins perturbée qu'en disposant le transducteur dans la cavité centrale dudit obstacle et l'on améliore ainsi la qualité du signal ultrasonore modulé par les oscillations dudit jet de gaz.

On pourrait également incliner le transducteur amont 52 vers la paroi inférieure 30 de l'oscillateur fluidique.

Un deuxième mode de réalisation de l'invention est partiellement représenté à la figure 9 et les références des différents éléments de cette figure seront précédés du chiffre 2. Cet oscillateur fluidique 201 est dit "en ligne" puisqu'il comporte une amenée de gaz 210 et une sortie de gaz 212, toutes deux alignées suivant le plan de symétrie longitudinal P, contrairement à l'exemple de réalisation représenté par les figures 1 à 7 où l'écoulement de gaz circule dans une boucle.

L'amenée de gaz est reliée à un passage 214 qui débouche en aval dans une première chambre 216 alignée avec ledit passage suivant le plan P. Cette première chambre présente une forme qui va en s'évasant vers l'aval jusqu'au droit d'un plan transversal P2 perpendiculaire au plan P, puis adopte une forme qui se rétrécit pour communiquer avec une extrémité amont 218a d'un canal principal 218 de mêmes caractéristiques que le canal principal 26 représenté sur les figures 1 à 7.

La première chambre comporte un élément profilé 220 situé sensiblement en son milieu et aligné suivant le plan P. Cet élément possède un évidement 222 dirigé vers l'aval et dans lequel est logé un transducteur ultrasonore 224 dit amont qui est ainsi protégé vis à vis de l'écoulement. L'élément profilé 220 peut également faire office de tranquilliseur pour l'écoulement du gaz.

Le canal principal 218 est aligné suivant le plan de symétrie longitudinal P et débouche dans une seconde chambre 226 dite chambre d'oscillation de mêmes caractéristiques que la chambre 32 précédemment décrite en référence aux figures 1 à 8. Cette chambre d'oscillation comporte un obstacle 228 identique à l'obstacle 36 représenté sur les figures 1 à 8.

L'obstacle 228 présente une cavité centrale 230 située en regard de l'extrémité débouchante aval 218b du canal principal 218 ainsi que deux cavités secondaires 231 et 232 de part et d'autre de ladite cavité centrale 230. Un second transducteur ultrasonore 234 est logé dans la cavité centrale 230 de manière à ce que les deux transducteurs ultrasonores soient sensiblement alignés suivant le plan de symétrie longitudinal P.

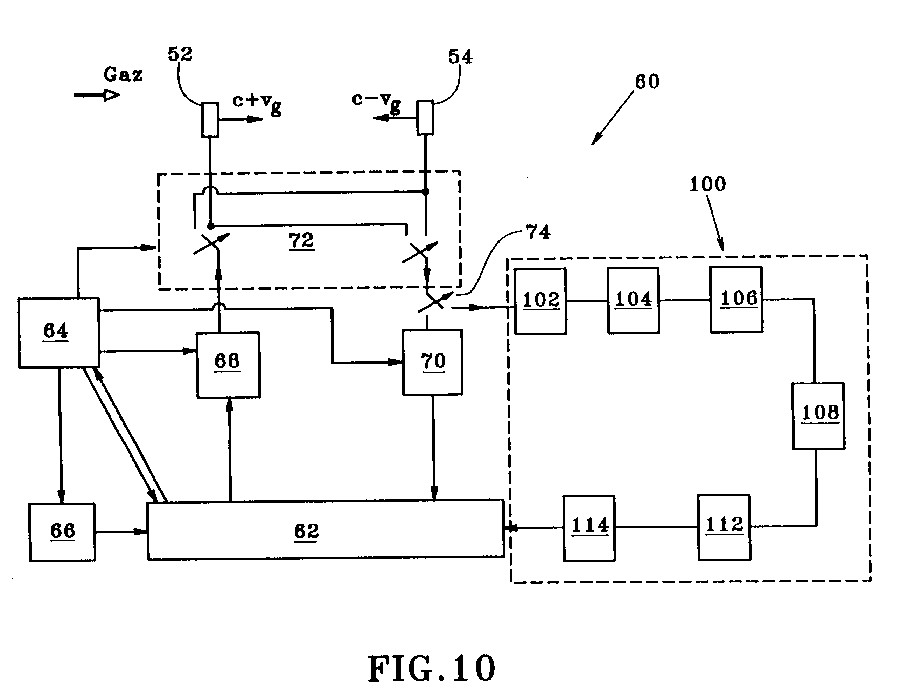

On va maintenant décrire en référence aux figures 10 à 16 le procédé de mesure d'une quantité volumique de gaz telle que le volume de gaz s'écoulant dans l'oscillateur fluidique qui est décrit précédemment en référence aux figures 1 à 3.

La gamme de débits de gaz s'étend par exemple de 5l/h jusqu'à 60001/h (compteur de gaz domestique).

Un bloc électronique 60 est représenté schématiquement sur la figure 10 et a pour fonction, d'une part, d'alimenter électriquement les différents blocs fonctionnels qui seront décrits ci-après et, d'autre part, de commander le procédé de mesure du volume de gaz. Ce bloc électronique 60 comprend un microcontroleur 62 relié à une source d'énergie électrique 64, par exemple une pile, et à une horloge à quartz 66 dont la fréquence est par exemple de 10 MHz et qui est également alimentée par la source d'énergie 64. Le microcontroleur 62 est également relié à deux blocs, l'un dit d'émission 68 et l'autre dit de réception 70, tous deux alimentés par la source d'énergie. Chacun des blocs comprend par exemple un amplificateur opérationnel et un convertisseur numérique/analogique pour le bloc d'émission 68, et un amplificateur opérationnel et un convertisseur analogique/numérique pour le bloc de réception 70.

Le bloc électronique 60 comprend également un circuit de commutation 72 alimenté par la source d'énergie 64 et relié, d'une part, aux blocs d'émission 68 et de réception 70 et, d'autre part, aux deux transducteurs ultrasonores 52 et 54.

Lorsque les oscillations du jet de gaz dans la chambre d'oscillation 32 sont trop faibles pour que l'on puisse en détecter la fréquence, c'est-à-dire lorsque le débit de gaz est inférieur à une valeur de transition par exemple égale à 100l/h, on utilise les transducteurs ultrasonores 52 et 54 pour mesurer le débit puis le volume de gaz de la manière suivante (régime de bas débit):

- le transducteur amont 52 émet un signal ultrasonore vers le transducteur aval 54,
- le transducteur aval 54 reçoit ce signal ultrasonore dont la vitesse de propagation c a été modifiée par la vitesse de l'écoulement du gaz vg (c+vg),
- on détermine une première valeur d'une grandeur caractéristique de la vitesse de propagation du signal ultrasonore reçu, comme par exemple le temps de propagation,
- on inverse le rôle d'émetteur et de récepteur des transducteurs ultrasonores 52 et 54,
- le transducteur aval 54 émet à son tour un signal ultrasonore vers le transducteur amont 52,
- le transducteur amont 52 reçoit ce signal ultrasonore (c-vg),

- on détermine une seconde valeur du temps de propagation du signal ultrasonore,
- et l'on en déduit une mesure du débit de gaz qui, par intégration, fournit une mesure du volume total de gaz ayant traversé l'oscillateur fluidique.

En référence à la figure 10, le déclenchement d'une mesure s'effectue de la manière suivante: le séquenceur non représenté du microcontroleur active le bloc d'émission 68 pour envoyer un signal électrique au transducteur amont 52, active également la source d'énergie électrique 64 qui commande le circuit de commutation 72 et met ainsi en connexion ledit bloc d'émission 68 et ledit transducteur amont 52 ainsi que le bloc de réception 70 et le transducteur aval 54.

Le signal électrique excite le transducteur amont 52 qui émet un signal ultrasonore dans le gaz à la vitesse c dans le sens de la circulation du gaz à un moment précis qui est repéré par l'horloge 66. Au bout du temps t1 déterminé par l'horloge 66, le transducteur aval 54 reçoit le signal ultrasonore à la vitesse c+vg.

Pour la mesure du temps t1 de propagation du signal ultrasonore, on se reportera à la méthode décrite dans la demande de brevet européen N°0426309.

Cette méthode consiste successivement à générer et à transmettre un signal ultrasonore constitué de plusieurs cycles ou impulsions et comportant à l'intérieur de ce signal un changement de phase, à recevoir ce signal ultrasonore et à détecter dans le signal reçu le changement de phase et l'instant correspondant de ce changement de phase permettant ainsi de déterminer le temps de propagation t1.

Tous les éléments nécessaires pour la mise en oeuvre de cette méthode de mesure du temps de propagation sont décrits dans la demande de brevet européen N°0426309 et ne seront donc pas repris dans cet exposé.

Le séquenceur du microcontroleur 62 commande ensuite l'inversion du circuit de commutation 72 afin que, d'une part, le bloc d'émission 68 soit maintenant relié au transducteur aval 54 et, d'autre part, le bloc de réception 70 soit en relation avec le transducteur amont 52.

De la même manière, un second signal ultrasonore est émis par le transducteur aval 54 en direction du transducteur amont 52 dans le sens opposé à la circulation du gaz et l'horloge 64 détermine le temps t2 nécessaire à la propagation dudit signal ultrasonore tel que décrit ci-dessus et dans la demande de brevet européen N°0426309.

Etant donné que les temps de propagation t1 et t2 sont exprimés par les relations suivantes:

$$t1 = L / (c-Vg) \qquad t2 = L / (c+Vg)$$

l'unité arithmétique et logique non représentée du microcontroleur 62 calcule la vitesse Vg du gaz

$$Vg = \frac{L}{2}\left[\frac{1}{t2} - \frac{1}{t1}\right]$$

et en déduit une mesure Qm du débit de gaz

$$Qm = S\,\frac{L}{2}\left[\frac{1}{t2} - \frac{1}{t1}\right]$$

où S représente la section interne du canal 26.

Le microcontroleur 62 compare chaque valeur de débit mesurée à la valeur du débit de transition prédéterminée et stockée en mémoire afin de vérifier si la prochaine mesure de débit doit être effectuée selon cette méthode ou bien en détectant la fréquence d'oscillation du jet de gaz dans la chambre d'oscillation 32 de l'oscillateur fluidique (régime de haut débit).

Si la valeur du débit mesurée est inférieure au débit de transition, au bout d'un intervalle de temps prédéfini on effectue une autre mesure du débit de gaz selon la méthode précédente.

Il convient de remarquer que l'oscillateur fluidique selon la présente invention, appelé oscillateur fluidique combiné, permet d'utiliser la mesure du temps de propagation d'un signal ultrasonore dans l'écoulement de gaz à des valeurs de débit suffisamment basses pour éviter d'introduire dans les mesures de débit des erreurs dues aux instabilités de l'écoulement de gaz, instabilités qui sont générées par le régime de transition laminaire/turbulent.

Avantageusement, les mesures à bas débits sont donc précises et présentent une bonne répétabilité.

En outre, étant donné que cette technique est utilisée pour couvrir une gamme peu étendue de débits, il est possible de se contenter de transducteurs ultrasonores à bande étroite ayant typiquement une fréquence de résonance de 40kHz au lieu de se servir de transducteurs plus sophistiqués et coûteux résonant à 100kHz.

Si la valeur du débit mesurée est supérieure à la valeur du débit de transition alors les oscillations du jet de gaz sont suffisamment fortes pour pouvoir détecter leur fréquence (régime de haut débit).

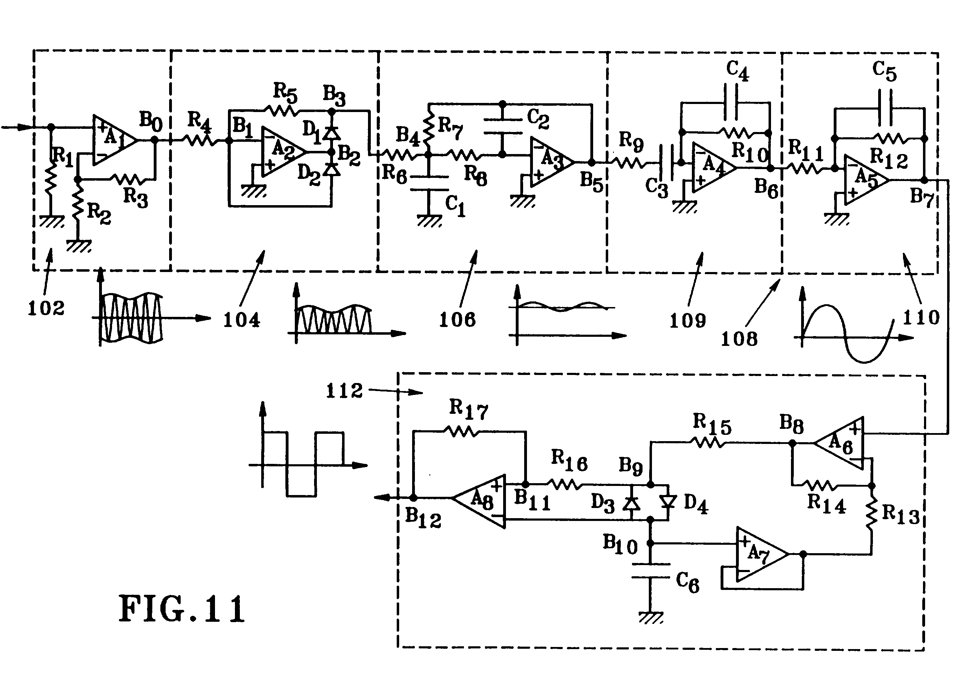

Dans ce cas, le séquenceur du microcontroleur 62 commande le circuit de commutation 72 afin que le bloc d'émission 68 soit relié au transducteur aval 54 et que le bloc de réception 70 soit relié au transducteur amont 52. Le séquenceur déclenche également le basculement de l'interrupteur 74 pour que le signal provenant du transducteur amont 52 soit traité par le bloc électronique 100 visible sur la partie droite de la figure 10. Ce bloc va maintenant être décrit de manière détaillée en référence à la figure 11.

Le microcontroleur 62 commande alors au bloc d'émission 68 de générer en permanence un signal électrique d'excitation du transducteur ultrasonore aval 54 par exemple de forme carrée, de fréquence fu afin que celui ci émette en permanence un signal ultrasonore de fréquence fu vers le transducteur amont 52 suivant une direction présentant une inclinaison d'environ 1,5° avec le plan de symétrie longitudinal P.

Le signal ultrasonore reçu par le transducteur amont est un signal de fréquence fu modulé par les fréquences f et 2f caractéristiques du phénomène d'oscillation du jet de gaz.

La fréquence fu est par exemple égale à 40 kHz et l'amplitude du signal électrique d'excitation est de 20mV.

La Demanderesse a ainsi pu constater qu'en émettant le signal ultrasonore en sens contraire de l'écoulement du gaz, il est possible de réduire considérablement l'influence de la pression hydrodynamique du jet et donc de réduire l'énergie du signal reçu pour la fréquence 2f.

A titre d'exemple, une différence de 10dB a pu être observée sur l'amplitude du signal reçu pour la fréquence 2f, ce qui est suffisant pour pouvoir distinguer la fréquence f de la fréquence 2f dans le signal modulé au moyen d'un matériel électronique simple, peu coûteux et peu dispendieux en énergie.

En outre, la Demanderesse s'est aperçue qu'en émettant le signal ultrasonore en sens contraire de l'écoulement de gaz, le signal ultrasonore modulé présentait une périodicité temporelle, facilitant ainsi la détection de la fréquence f.

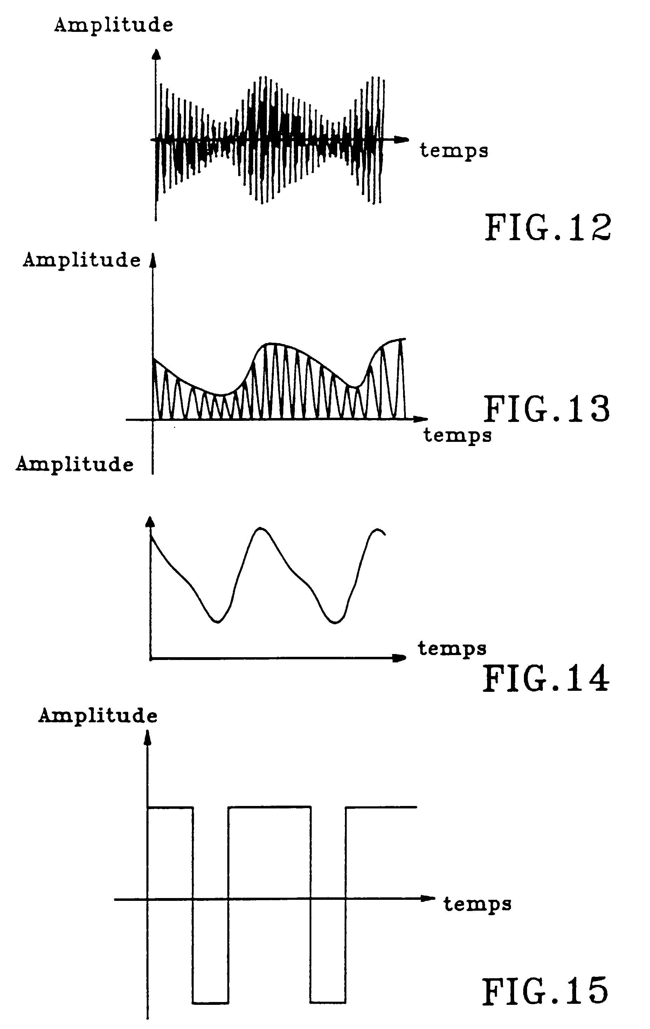

Ainsi, lorsque le transducteur amont 52 reçoit un signal ultrasonore modulé par les oscillations du jet de gaz, ce signal est d'abord amplifié par un amplificateur analogique 102 à faible bruit. Cet amplificateur analogique 102 est un amplificateur non inverseur destiné au couplage avec le circuit électronique de mesure en régime de bas débits et constitué d'un amplificateur opérationnel $A_1$ dont l'entrée non inverseuse est reliée, d'une part, au signal modulé reçu par le transducteur amont 52 et, d'autre part, à la masse par l'intermédiaire d'une résistance $R_1$. L'entrée inverseuse de cet amplificateur opérationnel $A_1$ est reliée, d'une part, à la masse par l'intermédiaire d'une résistance $R_2$ et, d'autre part, à la sortie Bo de cet amplificateur par une autre résistance $R_3$. Le signal ultrasonore modulé et amplifié a alors l'allure représentée à la figure 12.

Un circuit redresseur mono alternance 104 classique est représenté à la figure 11 et comprend une résistance $R_4$ entre la sortie Bo de l'amplificateur $A_1$ et $B_1$ (entrée inverseuse de $A_2$), un amplificateur opérationnel $A_2$ dont l'entrée non inverseuse est reliée à la masse.

L'entrée inverseuse de l'amplificateur A2 est reliée à la sortie $B_2$ de cet amplificateur par deux branches en parallèle: une première branche est constituée d'une résistance $R_5$ en série avec une diode $D_1$ montée en opposition et une seconde branche est constituée d'une diode $D_1$. De manière classique, lorsque la valeur de la différence $V_{B1}-V_{B2}$ est supérieure à la tension de seuil de la diode $D_1$ alors celle-ci est passante et l'on a $V_{B3}=$ $(R5/R4)V_{B2}$.

Inversement, quand la valeur $V_{B1}-V_{B2}$ devient inférieure à la tension de seuil de la diode $D_1$, la diode $D_2$ devient passante et $V_{B3} = 0$ le signal redressé a l'allure représentée sur la figure 13.

Afin de ne conserver que la fréquence f d'oscillation du jet de gaz, le signal redressé est ensuite filtré par le bloc électronique 106 qui exerce la fonction de filtre passe bas (deuxième ordre).

Comme représenté à la figure 11, le bloc 106 comprend deux résistances $R_6$ et $R_8$ et un condensateur $C_1$ formant un filtre en T qui est contreréactionné par une résistance $R_7$ et une capacité $C_2$ ainsi qu'un amplificateur opérationnel A3 dont l'entrée non inverseuse est ramenée à la masse.

Le signal filtré obtenu en B5 a l'allure représentée à la figure 14. Ce signal est ensuite injecté dans un bloc électronique d'amplification 108 constitué de deux étages, un premier étage 109 jouant le rôle d'un amplificateur passe bande de gain par exemple égal à 50 et dont la fréquence de coupure est comprise entre 0,5 et 50 Hz, et un second étage 110 jouant le rôle d'un amplificateur passe bas de gain par exemple égal à 5 et dont la fréquence de coupure est égale à 50 Hz.

Le premier étage comprend un résistance R9 et une capacité C3 montées en série entre la sortie B5 du bloc 106 et l'entrée inverseuse d'un amplificateur opérationnel A4. L'entrée non inverseuse de l'amplificateur A4 est reliée à la masse et l'entrée inverseuse est connectée à la sortie B6 de cet amplificateur par l'intermédiaire d'une capacité C6 et d'une résistance R10 en parallèle.

Le second étage 110 comprend en aval de B6 une résistance R11, une résistance R12 et une capacité C5 montées en parallèle et reliant l'entrée inverseuse d'un amplificateur opérationnel A5 à sa sortie B7.

L'entrée non inverseuse de l'amplificateur A5 étant reliée à la masse.

Ce bloc électronique 108 permet donc de ramener le signal issu du filtre 106 autour de zéro et d'amplifier ce signal. Le signal ainsi amplifié en B7 est ensuite injecté dans le bloc suivant 112 qui va le transformer en un signal impulsionnel tel que représenté à la figure 15.

Le bloc électronique 112 comprend un amplificateur opérationnel A6 dont l'entrée non inverseuse est reliée au point B7, l'entrée inverseuse étant reliée, d'une part, à la sortie B8 de l'amplificateur A6 par l'intermédiaire d'une résistance R14 et, d'autre part, à la sortie d'un circuit suiveur classique comprenant l'amplificateur opérationnel A7.

Grâce à la contre réaction du circuit suiveur, l'amplificateur A6 permet ainsi d'amplifier davantage les signaux de faible amplitude que les signaux de forte amplitude.

Le bloc comprend également une résistance R15 connectée à la sortie B8 de l'amplificateur A6 et au point B9, et deux diodes D3, D4 montées tête-bêche entre les points B9 et B10. Le point B10 est relié, d'une part, à la masse par l'intermédiaire d'une capacité C6 et, d'autre part, à l'entrée non inverseuse du circuit suiveur A7 et à l'entrée inverseuse d'un amplificateur opérationnel A8. La sortie de l'amplificateur opérationnel A8 (point B12) est rebouclée sur son entrée non inverseuse par l'intermédiaire d'une résistance R17. L'entrée non inverseuse de cet amplificateur est également reliée aux diodes D3 et D4 par une résistance R16. Lorsque l'amplitude la tension $VB_9 - VB_{10}$ augmente au dessus du seuil de la diode D4, la diode sera dans un état conducteur et la valeur du signal de tension au point B9 diminuée de la chute de tension de la diode D4 sera mémorisée dans le condensateur C6. L'amplificateur différentiel A8 compare alors la valeur de la tension au point

$$VB11 = \frac{VB9R17 + VB12R17}{R17 + R6}$$

avec la valeur de la tension du condensateur C6 et fournit un signal élevé lorsque la tension au point B9 est supérieure à la tension du condensateur C6.

Lorsque qu'une crête est atteinte et que l'amplitude du signal diminue, la différence entre la valeur du signal au point B9 et la valeur du signal mémorisée par le condensateur C6 tombe au dessous du seuil de la diode D4 et la diode D4 devient alors non-conductrice. La valeur du signal mémorisée dans le condensateur C6 est alors fixée. Quand l'amplitude du signal au point B9 chute au dessous de la valeur du signal mémorisée par le condensateur C6, l'amplificateur A8 fournit un signal bas montrant qu'une crête s'est présentée. Quand l'amplitude du signal chute au dessous de la valeur du signal mémorisée dans le condensateur C6 d'une valeur correspondant au seuil de la diode D3 + B10, celle-ci devient passante et la valeur du signal mémorisée dans le condensateur C6 chutera avec la valeur du signal au point B9 diminuée de la valeur de la chute de tension de la diode D3. Quand une crête négative est atteinte et passée, la diode D3 deviendra encore non-conductrice et l'amplificateur A8 indiquera un changement d'état quand le signal au point B11 augmentera au dessus de la valeur du signal mémorisée dan le condensateur C6.

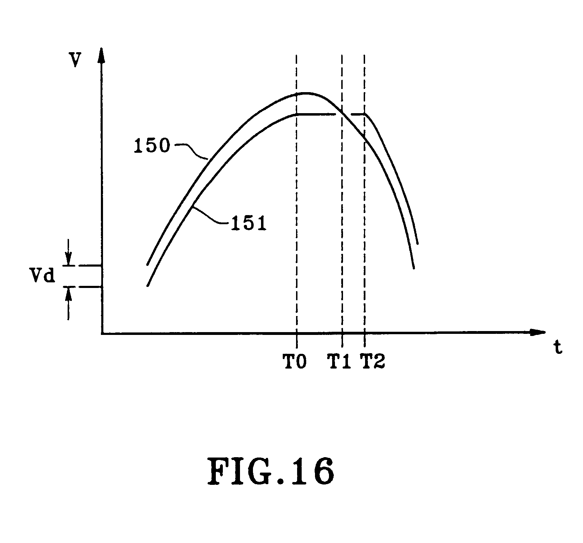

La figure 16 montre la variation de la tension du premier signal au point B9 représentée par la courbe 150 et la variation de la tension du condensateur C6 représentée par la courbe 151. Au début, la tension du condensateur 151 est égale à la tension du signal 150 diminuée de la valeur Vd correspondant à la chute de tension de la diode D4 et l'amplificateur A8 fournit un signal élevé. Quand une crête est atteinte au temps TO et lorsque la tension du signal 150 diminue en dessous de la valeur de seuil de la diode D4, la tension du condensateur 151 est fixée. Au temps T1 la tension du signal 150 chute en dessous de la tension mémorisée dans le condensateur 151 et la sortie de l'amplificateur A8 fournit un signal bas. Au temps T2, la différence ente la tension du premier signal 150 et la tension mémorisée dans le condensateur 151 est plus grande que la valeur du seuil de la diode D4 et la tension du condensateur suit encore la tension du premier signal.

Le circuit électronique correspondant au bloc 112 est donc un détecteur de crête. L'amplificateur A8 de la figure 11 est un comparateur à hystérésis qui compare les valeurs des deux tensions 150 et 151 représentées sur la figure 16. Ainsi, lorsque la valeur de la tension au point B11, VB11, c'est-à-dire celle de l'entrée non inverseuse de l'amplificateur A8, est supérieure à la valeur de la tension au point B10, VB10, c'est-à-dire celle de l'entrée inverseuse de l'amplificateur A8, l'amplificateur affiche une tension de sortie constante égale à +Vcc où Vcc est la tension d'alimentation dudit amplificateur et la tension B11 devient

$$B11 = \frac{VccR16 + VB9R17}{R16 + R17}$$

Inversement, tel que représenté sur la figure 16 à l'instant T1, lorsque VB11 est inférieure à VB10, alors la tension de sortie de l'amplificateur A8 est égale à -Vcc et B11 devient

$$B11 = \frac{-VccR16 + VB9R17}{R16 + R17}.$$

On obtient ainsi en sortie du bloc 112 un signal impulsionnel où chaque impulsion représente un volume unitaire de gaz balayé par le jet de gaz au cours d'une oscillation (figure 15).

Un compteur électronique 114 (figure 10), par exemple de 16 bits, permet alors de totaliser le nombre d'impulsions et le microcontroleur peut ensuite commander l'affichage du volume de gaz qui s'est écoulé dans l'oscillateur fluidique.

Il convient de remarquer que si l'on choisit d'aligner de manière précise les transducteurs 52, 54 suivant le plan de symétrie longitudinal P afin de favoriser l'énergie du signal reçu pour la fréquence 2f, le circuit électronique 100 qui vient d'être décrit est particulièrement adapté pour la détection de cette fréquence.

Lorsque les oscillations du jet de gaz deviennent trop faibles pour pouvoir détecter leur fréquence, c'est-à-dire pour une valeur du débit de gaz inférieure au débit de transition précédemment mentionné, il est prévu d'utiliser les transducteurs ultrasonores 52, 54 pour mesurer le temps de propagation de signaux ultrasonores dans l'écoulement de gaz tel que décrit plus haut (régime de bas débit). Pour décider de l'utilisation du régime de bas débit ou de haut débit, on peut par exemple prévoir de mesurer l'intervalle de temps séparant deux impulsions et de comparer l'intervalle ainsi mesuré à une valeur prédéterminée correspondant au débit de transition. Si l'intervalle de temps mesuré est supérieur à cette valeur prédéterminée, on utilise alors les transducteurs ultrasonores alternativement en émetteur et récepteur.

Il est également possible de prévoir une plage de recouvrement s'étendant par exemple de 100l/h à 150 l/h et sur laquelle on utilisera les mesures correspondant aux deux régimes de fonctionnement de l'oscillateur fluidique combiné.

Ainsi, si l'oscillateur fluidique combiné fonctionne en régime de bas débit, on peut alors continuer à mesurer le débit jusqu'à la valeur supérieure de la plage de recouvrement avant de basculer sur le régime de haut débit. De même, lorsque l'oscillateur fluidique fonctionne en régime de haut débit, il faut que le débit descende en dessous de la valeur inférieure de la plage de recouvrement pour que ledit oscillateur fluidique fonctionne en régime de bas débit.

Avantageusement, cette plage de recouvrement permet de s'assurer que l'on passe d'un régime à l'autre sans revenir au régime initial. L'oscillateur fluidique combiné selon la présente invention peut s'adapter à différentes gammes de débit et peut notamment couvrir des débits supérieurs à 6000 l/h.

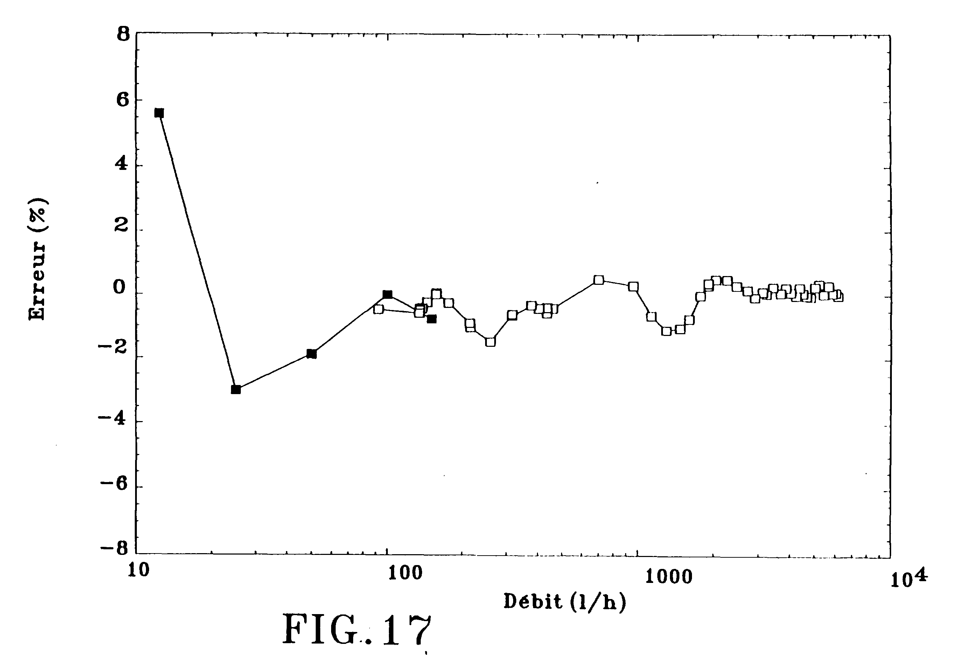

La figure 17 est une courbe de calibration de l'oscillateur fluidique combiné fonctionnant sur une gamme de débits s'étendant d'environ 10l/h à 7000 l/h. Cette courbe a été obtenue en relevant l'erreur relative commise sur la mesure du débit compris dans la gamme précédemment mentionnée. Il est ainsi possible de constater que l'oscillateur fluidique combiné est parfaitement métrologique sur toute cette large gamme de débits.

On notera avantageusement que l'invention s'applique également à d'autres types d'oscillateurs fluidiques tels que par exemple celui décrit dans la demande de brevet GB N°2 120 384 qui est basé sur l'effet Coanda.

En outre, il est tout à fait envisageable d'utiliser l'oscillateur fluidique combiné selon l'invention pour, d'une part, couvrir une gamme de débits de fluide sur laquelle les oscillations du jet de fluide sont suffisamment fortes pour pouvoir en détecter la fréquence et, d'autre part, de n'utiliser le fonctionnement en régime de bas débit tel qu'expliqué ci-dessus que pour déterminer un débit de fuite.

Par exemple, l'oscillateur fluidique selon l'invention pourrait être utilisé en tant que compteur de gaz commercial (gamme de débits de 0,25 à 40 $m^3$/h) ou industriel (gamme de débits de 1 à 160 $m^3$/h) capable de déterminer un débit de fuite.

On peut également prévoir d'augmenter la sensibilité du compteur en positionnant précisément les transducteurs ultrasonores dans le plan de symétrie longitudinal de l'oscillateur fluidique.

## Revendications

1. Oscillateur fluidique symétrique par rapport à un plan de symétrie longitudinal (P) dans lequel est contenue la direction longitudinale de l'écoulement de fluide et comprenant

   - des moyens (26b) pour engendrer un jet de fluide bidimensionnel oscillant transversalement par rapport audit plan de symétrie longitudinal (P),
   - deux transducteurs ultrasonores (52, 54),
   - des moyens (62 - 72) pour, d'une part, générer à partir de l'un desdits transducteurs un signal ultrasonore dans l'écoulement de fluide en direction de l'autre transducteur et, d'autre part, recevoir ledit signal ultrasonore modulé par les oscillations du jet de fluide,
   - et des moyens (100) pour traiter le signal reçu afin de déterminer une quantité volumique de fluide écoulée dans ledit oscillateur fluidique

   caractérisé en ce que les transducteurs ultrasonores (52, 54) sont sensiblement alignés suivant le plan de symétrie longitudinal (P).

2. Oscillateur fluidique selon la revendication 1, caractérisé en ce que pour les faibles quantités volumiques de fluide s'écoulant dans ledit oscillateur fluidique, les transducteurs ultrasonores (52, 54) sont aptes à mesurer ces faibles quantités volumiques de fluide.

3. Oscillateur fluidique selon la revendication 2, caractérisé en ce qu'il comporte

   - des moyens (62-72) pour émettre et recevoir alternativement un signal ultrasonore à partir de chacun des transducteurs ultrasonores (52, 54)
   - des moyens pour déterminer, à partir de chaque signal ultrasonore reçu et pour deux signaux ultrasonores consécutifs, une valeur d'une grandeur caractéristique de la vitesse de propagation dudit signal ultrasonore modifiée par l'écoulement de fluide et pour en déduire la quantité volumique de fluide écoulée dans ledit oscillateur fluidique.

4. Oscillateur fluidique selon l'une des revendications 1 à 3, caractérisé en ce que les transducteurs ultrasonores sont disposés dans des plans transversaux différents, l'un desdits transducteurs étant dit amont (52) et étant disposé en amont des moyens (26b) pour engendrer le jet de fluide bidimensionnel, l'autre transducteur étant dit aval (54).

5. Oscillateur fluidique selon la revendication 3, caractérisé en ce que la grandeur caractéristique de la vitesse de propagation du signal ultrasonore est le temps de propagation dudit signal.

6. Oscillateur fluidique selon la revendication 3, caractérisé en ce que la grandeur caractéristique de la vitesse de propagation du signal ultrasonore est la phase dudit signal.

7. Oscillateur fluidique selon l'une des revendications précédentes, caractérisé en ce que les moyens pour engendrer un jet de fluide bidimensionnel oscillant sont formés par une ouverture d'entrée du fluide (26b) de dimension transversale ou largeur d et de hauteur h et en ce qu'il comprend:

- une chambre d'oscillation (32) raccordée, par une de ses extrémités, à ladite ouverture d'entrée du fluide (26b) et, par l'extrémité opposée, à une ouverture de sortie du fluide (34), lesdites ouvertures étant alignées suivant ledit plan de symétrie longitudinal (P),
- au moins un obstacle (36) disposé dans ladite chambre d'oscillation (32) entre les deux ouvertures d'entrée (26b) et de sortie (34) du fluide.

8. Oscillateur fluidique selon les revendications 4 et 7, caractérisé en ce que le transducteur amont (52) est disposé en amont de l'ouverture d'entrée du fluide (26b).

9. Oscillateur fluidique selon la revendication 7, caractérisé en ce que l'obstacle (36) présente une partie frontale (36a) dans laquelle est pratiquée une cavité (37) en regard de l'ouverture d'entrée du fluide (26b).

10. Oscillateur fluidique selon les revendications 4 et 7, caractérisé en ce que le transducteur aval (54) est assujetti à l'obstacle (36).

11. Oscillateur fluidique selon les revendications 9 et 10, caractérisé en ce que le transducteur aval (54) est disposé dans la cavité (37) de l'obstacle (36).

12. Oscillateur fluidique selon l'une des revendications 7 à 11, caractérisé en ce qu'il comporte en amont de l'obstacle (36) un passage pour le fluide délimité par deux parois (28, 30) perpendiculaires au plan de symétrie longitudinal P et séparées d'une distance h.

13. Oscillateur fluidique selon la revendication 12, caractérisé en ce qu'il comporte en amont de l'ouverture d'entrée du fluide (26b) un canal (26) de direction longitudinale formant au moins une partie du passage pour le fluide, ledit canal ayant une largeur d sensiblement constante et perpendiculaire à la distance h.

14. Oscillateur fluidique selon la revendication 13, caractérisé en ce que le canal (26) possède, à une de ses extrémités, une ouverture dite aval (26b) correspondant à l'ouverture d'entrée du fluide et, à son extrémité opposée, une ouverture dite amont (26a) qui présente, dans un plan parallèle à la direction de l'écoulement du fluide et perpendiculaire au plan (P), une forme de convergent de largeur se réduisant progressivement à la largeur d.

15. Oscillateur fluidique selon les revendications 4 et 13, caractérisé en ce que le transducteur amont (52) est disposé en amont du canal (26).

16. Oscillateur fluidique selon l'une des revendications 13 à 15, caractérisé en ce qu'il comprend deux arrivées de fluide (14, 16) symétriques par rapport au plan de symétrie longitudinal P et débouchant dans le passage, en amont du canal (26).

17. Oscillateur fluidique selon la revendication 16, caractérisé en ce qu'un espace libre (20) formant une autre partie du passage pour le fluide est aménagé en amont du canal (26) et en ce que les deux arrivées de fluide (14, 16) débouchent dans ledit espace libre (20).

18. Oscillateur fluidique selon les revendications 4 et 17, caractérisé en ce que le transducteur amont (52) est disposé en amont de l'espace libre (20).

19. Oscillateur fluidique selon l'une des revendications 1 à 18, caractérisé en ce que les transducteurs ultrasonores (52, 54) sont situés à la même côte le long d'une direction perpendiculaire à la direction longitudinale de l'écoulement de fluide et contenue dans le plan de symétrie longitudinal.

20. Oscillateur fluidique selon les revendications 12 et 19, caractérisé en ce que les transducteurs ultrasonores sont tous deux assujettis à une seule des parois (28,30) délimitant le passage pour le fluide.

21. Oscillateur fluidique selon l'une des revendications 1 à 18, caractérisé en ce que les transducteurs ultrasonores (52, 54) sont décalés dans une direction perpendiculaire à la direction longitudinale de l'écoulement de fluide et contenue dans le plan de symétrie longitudinal.

22. Oscillateur fluidique selon les revendications 12 et 21, caractérisé en ce que chaque transducteur ultrasonore (52, 54) est respectivement assujetti à l'une des parois (28, 30) délimitant le passage pour le fluide.

23. Procédé de mesure d'une quantité volumique d'un fluide s'écoulant dans un oscillateur fluidique dans lequel un jet de fluide oscille transversalement par rapport au plan de symétrie longitudinal (P), ledit procédé consistant successivement à:

- émettre un signal ultrasonore dans l'écoulement de fluide à partir d'un transducteur ultrasonore,
- recevoir ledit signal ultrasonore modulé par les oscillations du jet de fluide avec un autre transducteur ultrasonore,
- et traiter le signal reçu afin de déterminer ladite quantité volumique de fluide écoulée,

caractérisé en ce que ledit procédé consiste à émettre le signal ultrasonore dans une direction sensiblement contenue dans le plan de symétrie longitudinal (P).

24. Procédé selon la revendication 23, caractérisé en ce que ledit procédé consiste à émettre le signal ultrasonore dans le sens de l'écoulement du fluide dans l'oscillateur fluidique.

25. Procédé selon la revendication 23 et 24, caractérisé en ce que ledit procédé consiste à détecter, après réception du signal ultrasonore et à partir dudit signal ultrasonore, une fréquence d'oscillation qui est égale au double de la fréquence d'oscillation du jet de fluide permettant ainsi d'améliorer la sensibilité de la mesure.

26. Procédé selon la revendication 23, caractérisé en ce que ledit procédé consiste à émettre le signal ultrasonore en sens inverse de l'écoulement du fluide dans l'oscillateur fluidique.

27. Procédé selon l'une des revendications 23 à 26, caractérisé en ce que pour les faibles quantités volumiques de fluide s'écoulant dans l'oscillateur fluidique, ledit procédé consiste successivement à:

    - émettre un signal ultrasonore d'un transducteur vers l'autre dans une direction sensiblement contenue dans le plan de symétrie longitudinal (P),
    - recevoir ledit signal ultrasonore dont la vitesse de propagation a été modifiée par l'écoulement de fluide,
    - déterminer une première valeur d'une grandeur caractéristique de ladite vitesse de propagation du signal ultrasonore reçu,
    - répéter les étapes précédentes en inversant le rôle d'émetteur et de récepteur des transducteurs ultrasonores et déterminer une seconde valeur de ladite grandeur caractéristique de la vitesse de propagation d'un autre signal ultrasonore,
    - et en déduire la mesure d'une faible quantité volumique de fluide.

28. Procédé selon la revendication 27, caractérisé en ce que la grandeur caractéristique de la vitesse de propagation du signal ultrasonore est le temps de propagation dudit signal.

29. Procédé selon la revendication 27, caractérisé en ce que la grandeur caractéristique de la vitesse de propagation du signal ultrasonore est la phase dudit signal.

30. Application de l'oscillateur fluidique selon l'une des revendications 1 à 22 et du procédé de mesure selon l'une des revendications 23 à 29 à la mesure d'une quantité volumique de gaz.

## Patentansprüche

1. Fluidoszillator, der in bezug auf eine longitudinale Symmetrieebene (P), in der die Längsrichtung der Fluidströmung enthalten ist, symmetrisch ist und enthält:

    - Mittel (26b) zum Erzeugen eines zweidimensionalen Fluidstrahls, der in bezug auf die longitudinale Symmetrieebene (P) transversal oszilliert,
    - zwei Ultraschall-Meßwandler (52, 54),
    - Mittel (62-72), die einerseits anhand eines der Meßwandler ein Ultraschallsignal in der Fluidströmung in Richtung vom anderen Meßwandler erzeugen und andererseits das durch die Oszillationen des Fluidstrahls modulierte Ultraschallsignal empfangen,
    - und Mittel (100) zum Verarbeiten des empfangenen Signals, um eine Volumengröße des im Fluidoszillator strömenden Fluids zu bestimmen,

    dadurch gekennzeichnet, daß die Ultraschall-Meßwandler (52, 54) im wesentlichen auf die longitudinale Symmetrieebene (P) ausgerichtet sind.

2. Fluidoszillator nach Anspruch 1, dadurch gekennzeichnet, daß die Ultraschall-Meßwandler (52, 54) für geringe Volumengrößen des im Fluidoszillator strömenden Fluids diese geringen Volumengrößen des Fluids messen können.

3. Fluidoszillator nach Anspruch 2, dadurch gekennzeichnet, daß er enthält:

    - Mittel (62-72) zum abwechselnden Senden und Empfangen eines Ultraschallsignals von jedem der Ultraschall-Meßwandler (52, 54),
    - Mittel, die anhand jedes empfangenen Ultraschallsignals und für zwei aufeinanderfolgende Ultraschallsignale einen Wert einer charakteristischen Größe der Ausbreitungsgeschwindigkeit des durch die Fluidströmung modifizierten Ultraschallsignals bestimmen und daraus die Volumengröße des im Fluidoszillator strömenden Fluids ableiten.

4. Fluidoszillator nach einem der Ansprüche 1 bis 3, dadurch gekennzeichnet, daß die Ultraschall-Meßwandler in verschiedenen transversalen Ebenen angeordnet sind, wobei einer der Meßwandler einlaßseitig (52) genannt wird und auf der Einlaßseite der Mittel (26) zum Erzeugen des zweidimensionalen Fluidstrahls angeordnet sind, während der andere Meßwandler auslaßseitig (54) genannt wird.

5. Fluidoszillator nach Anspruch 3, dadurch gekennzeichnet, daß die charakteristische Größe der Ausbreitungsgeschwindigkeit des Ultraschallsignals die Ausbreitungszeit des Signals ist.

6. Fluidoszillator nach Anspruch 3, dadurch gekennzeichnet, daß die charakteristische Größe der Ausbreitungsgeschwindigkeit des Ultraschallsignals die Phase des Signals ist.

7. Fluidoszillator nach einem der vorangehenden Ansprüche, dadurch gekennzeichnet, daß die Mittel zum Erzeugen eines oszillierenden zweidimensionalen Fluidstrahls durch eine Fluideintrittsöffnung (26b) mit einer transversalen Abmessung oder Breite d und einer Höhe h gebildet sind, und daß er enthält:

   - eine Oszillationskammer (32), die mit einem ihrer Enden mit der Fluideintrittsöffnung (26b) verbunden ist und mit dem entgegengesetzten Ende mit einer Fluidaustrittsöffnung (34) verbunden ist, wobei die Öffnungen auf die longitudinale Symmetrieebene (P) ausgerichtet sind,
   - wenigstens ein Hindernis (36), das in der Oszillationskammer (32) zwischen der Fluideintrittsöffnung (26b) und der Fluidaustrittsöffnung (34) angeordnet ist.

8. Fluidoszillator nach den Ansprüchen 4 und 7, dadurch gekennzeichnet, daß der einlaßseitige Meßwandler (52) auf der Einlaßseite der Fluideintrittsöffnung (26b) angeordnet ist.

9. Fluidoszillator nach Anspruch 7, dadurch gekennzeichnet, daß das Hindernis (36) einen vorderen Teil (36a) aufweist, in dem gegenüber der Fluideintrittsöffnung (26b) ein Hohlraum (37) ausgespart ist.

10. Fluidoszillator nach den Ansprüchen 4 und 7, dadurch gekennzeichnet, daß der auslaßseitige Meßwandler (54) mit dem Hindernis (36) verbunden ist.

11. Fluidoszillator nach den Ansprüchen 9 und 10, dadurch gekennzeichnet, daß der auslaßseitige Meßwandler (54) im Hohlraum (37) des Hindernisses (36) angeordnet ist.

12. Fluidoszillator nach einem der Ansprüche 7 bis 11, dadurch gekennzeichnet, daß er vor dem Hindernis (36) einen Durchlaß für das Fluid aufweist, der durch zwei zur longitudinalen Symmetrieebene (P) senkrechte Wände (28, 30), die durch eine Strecke h getrennt sind, begrenzt ist.

13. Fluidoszillator nach Anspruch 12, dadurch gekennzeichnet, daß er vor der Fluideintrittsöffnung (26b) einen Kanal (26) in longitudinaler Richtung aufweist, der wenigstens einen Teil des Durchlasses für das Fluid bildet, wobei der Kanal eine Breite d besitzt, die im wesentlichen konstant und zur Strecke h senkrecht ist.

14. Fluidoszillator nach Anspruch 13, dadurch gekennzeichnet, daß der Kanal (26) an einem seiner Enden eine sogenannte auslaßseitige Öffnung (26b), die der Fluideintrittsöffnung entspricht, und an seinem entgegengesetzten Ende eine sogenannte einlaßseitige Öffnung (26a) aufweist, die in einer zur Fluidströmungsrichtung parallelen und zur Ebene (P) senkrechten Ebene eine konvergierende Form mit einer progressiv auf die Breite d abnehmenden Breite besitzt.

15. Fluidoszillator nach den Ansprüche 4 und 13, dadurch gekennzeichnet, daß der einlaßseitige Meßwandler (52) vor dem Kanal (26) angeordnet ist.

16. Fluidoszillator nach einem der Ansprüche 13 bis 15, dadurch gekennzeichnet, daß er zwei Fluideingänge (14, 16) aufweist, die in bezug auf die longitudinale Symmetrieebene (P) symmetrisch sind und vor dem Kanal (26) in den Durchlaß münden.

17. Fluidoszillator nach Anspruch 16, dadurch gekennzeichnet, daß vor dem Kanal (26) ein freier Raum (20) ausgebildet ist, der einen weiteren Teil des Durchlasses für das Fluid bildet, und daß die beiden Fluideingänge (14, 16) in den freien Raum (20) münden.

18. Fluidoszillator nach den Ansprüche 4 und 17, dadurch gekennzeichnet, daß der einlaßseitige Meßwandler (52) vor dem freien Raum (20) angeordnet ist.

19. Fluidoszillator nach einem der Ansprüche 1 bis 18, dadurch gekennzeichnet, daß sich die Ultraschall-Meßwandler (52, 54) auf derselben Seite entlang einer Richtung befinden, die zur longitudinalen Richtung der Fluidströmung senkrecht ist und in der longitudinalen Symmetrieebene enthalten ist.

20. Fluidoszillator nach einem der Ansprüche 12 und 19, dadurch gekennzeichnet, daß beide Ultraschall-Meßwandler mit einer einzigen der Wände (28, 30), die den Fluiddurchlaß begrenzen, verbunden sind.

21. Fluidoszillator nach einem der Ansprüche 1 bis 18, dadurch gekennzeichnet, daß die Ultraschall-Meßwandler (52, 54) in einer Richtung, die zur longitudinalen Richtung der Fluidströmung senkrecht ist und in der longitudinalen Symmetrieebene enthalten ist, versetzt sind.

22. Fluidoszillator nach den Ansprüchen 12 und 21, dadurch gekennzeichnet, daß jeder Ultraschall-Meßwandler (52, 54) jeweils mit einer der Wände (28, 30), die den Fluiddurchlaß begrenzen, verbunden ist.

23. Verfahren zum Messen einer Volumengröße eines in einen Fluidoszillator strömenden Fluids, in dem ein Fluidstrahl transversal in bezug auf die longitudinale Symmetrieebene (P) oszilliert, wobei das Verfahren nacheinander darin besteht:

    - von einem Ultraschall-Meßwandler in die Fluidströmung ein Ultraschallsignal zu senden,
    - das durch die Oszillationen des Fluidstrahls modulierte Ultraschallsignal durch einen weiteren Ultraschall-Meßwandler zu empfangen,
    - und das empfangene Signal zu verarbeiten, um die Volumengröße des strömenden Fluids zu bestimmen,

    dadurch gekennzeichnet, daß das Verfahren darin besteht, das Ultraschallsignal in eine Richtung zu senden, die im wesentlichen in der longitudinalen Symmetrieebene (P) enthalten ist.

24. Verfahren nach Anspruch 23, dadurch gekennzeichnet, daß das Verfahren darin besteht, das Ultraschallsignal in Richtung der Fluidströmung im Fluidoszillator zu senden.

25. Verfahren nach Anspruch 23 und 24, dadurch gekennzeichnet, daß das Verfahren darin besteht, nach dem Empfang des Ultraschallsignals und anhand des Ultraschallsignals eine Oszillationsfrequenz zu erfassen, die gleich der doppelten Oszillationsfrequenz des Fluidstrahls ist, so daß die Empfindlichkeit der Messung verbessert werden kann.

26. Verfahren nach Anspruch 23, dadurch gekennzeichnet, daß das Verfahren darin besteht, das Ultraschallsignal in der zur Fluidströmung im Fluidoszillator entgegengesetzten Richtung zu senden.

27. Verfahren nach einem der Ansprüche 23 bis 26, dadurch gekennzeichnet, daß für geringe Volumengrößen des im Fluidoszillator strömenden Fluids das Verfahren nacheinander darin besteht:

    - ein Ultraschallsignal von einem Meßwandler zum nächsten in einer Richtung zu senden, die im wesentlichen in der longitudinalen Symmetrieebene (P) enthalten ist,
    - das Ultraschallsignal zu empfangen, dessen Ausbreitungsgeschwindigkeit durch die Fluidströmung modifiziert worden ist,
    - einen ersten Wert einer charakteristischen Größe der Ausbreitungsgeschwindigkeit des empfangenen Ultraschallsignals zu bestimmen,
    - die vorhergehenden Schritte zu wiederholen, indem die Rollen des Senders und des Empfängers der Ultraschall-Meßwandler vertauscht werden, und einen zweiten Wert der chrakteristischen Größe der Ausbreitungsgeschwindigkeit eines weiteren Ultraschallsignals zu bestimmen,
    - und daraus den Meßwert einer geringen Volumengröße des Fluids abzuleiten.

28. Verfahren nach Anspruch 27, dadurch gekennzeichnet, daß die charakteristische Größe der Ausbreitungsgeschwindigkeit des Ultraschallsignals die Ausbreitungszeit des Signals ist.

29. Verfahren nach Anspruch 27, dadurch gekennzeichnet, daß die charakteristische Größe der Ausbreitungsgeschwindigkeit des Ultraschallsignals die Phase des Signals ist.

30. Anwendung des Fluidoszillators nach einem der Ansprüche 1 bis 22 und des Meßverfahrens nach einem der Ansprüche 23 bis 29 auf die Messung einer Gas-Volumengröße.

**Claims**

1. A fluidic oscillator that is symmetrical about a longitudinal plane of symmetry (P) in which a longitudinal fluid flow direction is contained, the oscillator comprising:

    - means (26b) for generating a two-dimensional jet of fluid that oscillates transversely relative to said longitudinal plane of symmetry (P);
    - two ultrasound transducers (52, 54);
    - means (62-72) firstly for generating an ultrasound signal in the fluid flow travelling from one of said transducers towards the other, and secondly for receiving said ultrasound signal as modulated by the oscillations of the jet of fluid; and
    - means (100) for processing the received signal so as to determine a volume-related quantity concerning the fluid that has flowed through said fluidic oscillator; characterized in that the ultrasound transducers (52, 54) are substantially in alignment with the longitudinal plane of symmetry (P).

2. A fluidic oscillator according to claim 1, characterized in that for small volume-related quantities of fluid flowing through said fluidic oscillator, the ultrasound transducers (52, 54) are suitable for measuring said small volume-related quantities of fluid.

3. A fluidic oscillator according to claim 2, characterized in that it includes:

   - means (62-74) for emitting and receiving an ultrasound signal alternately from each of the ultrasound transducers (52, 54); and
   - means responsive to each received ultrasound signal and to consecutive pairs of ultrasound signals to determine a value for a magnitude that is characteristic of the propagation speed of said ultrasound signal as modified by the fluid flow, and to deduce therefrom a volume-related quantity applicable to the fluid that has flowed through said fluidic oscillator.

4. A fluidic oscillator according to any one of claims 1 to 3, characterized in that the ultrasound transducers are disposed in different transverse planes, an "upstream" one of said transducers (52) being disposed upstream from the means (26b) for generating the two-dimensional jet of fluid, the other transducer (54) being a "downstream" transducer.

5. A fluidic oscillator according to claim 3, characterized in that the magnitude characteristic of the propagation speed of the ultrasound signal is the propagation time of said signal.

6. A fluidic oscillator according to claim 3, characterized in that the magnitude characteristic of the propagation speed of the ultrasound signal is the phase of said signal.

7. A fluidic oscillator according to any preceding claim, characterized in that the means for generating an oscillating two-dimensional jet of fluid arc formed by a fluid admission opening (26b) of transverse size or width $\underline{d}$ and of height $\underline{h}$, and in that it comprises:

   - an oscillation chamber (32) connected at one of its ends to said fluid admission opening (26b) and at its opposite end to a fluid outlet opening (34), said openings being in alignment in said longitudinal plane of symmetry (P); and
   - at least one obstacle (36) disposed in said oscillation chamber (32) between the admission opening (26b) and the fluid outlet opening (34).

8. A fluidic oscillator according to claims 4 and 7, characterized in that the upstream transducer (52) is disposed upstream from the fluid admission opening (26b).

9. A fluidic oscillator according to claim 7, characterized in that the obstacle (36) has a front portion (36a) in which a cavity (37) is formed facing the fluid admission opening (26b).

10. A fluidic oscillator according to claims 4 and 7, characterized in that the downstream transducer (54) is secured to the obstacle (36).

11. A fluidic oscillator according to claims 9 and 10, characterized in that the downstream transducer (54) is disposed in the cavity (37) of the obstacle (36).

12. A fluidic oscillator according to any one of claims 7 to 11, characterized in that it includes, upstream from the obstacle (36), a passage for the fluid that is defined by two walls (28, 30) that are perpendicular to the longitudinal plane of symmetry (P) and that are spaced apart by a distance $\underline{h}$.

13. A fluidic oscillator according to claim 12, characterized in that it includes, upstream from the fluid admission opening (26b), a longitudinally-extending channel (26) forming at least a portion of the passage for the fluid, said channel being of substantially constant width d that is perpendicular to the distance $\underline{h}$.

14. A fluidic oscillator according to claim 13, characterized in that the channel (26) possesses, at one of its ends, a "downstream" opening (26b) that corresponds to the fluid admission opening, and at its opposite end, an "upstream" opening (26a) which, in a plane parallel to the flow direction of the fluid and perpendicular to the longitudinal plane of symmetry (P), is convergent in shape, its width tapering progressively down to the width $\underline{d}$.

15. A fluidic oscillator according to claims 4 and 13, characterized in that upstream transducer (52) is disposed upstream from the channel (26).

16. A fluidic oscillator according to any one of claims 13 to 15, characterized in that it includes two fluid inlets (14, 16) disposed symmetrically about the longitudinal plane of symmetry (P) and opening out into the passage, upstream from the channel (26).

17. A fluidic oscillator according to claim 16, characterized in that an empty space (20) forming another portion of the passage for the fluid is provided upstream from the channel (26) and in that the two fluid inlets (14, 16) open out into said empty space (20).

18. A fluidic oscillator according to claims 4 and 17, characterized in that the upstream transducer (52) is disposed upstream from the empty space (20).

19. A fluidic oscillator according to any one of claims 1 to 18, characterized in that the ultrasound transducers (52, 54) are situated on the same side in a direction perpendicular to the longitudinal direction of the fluid flow, and contained in the longitudinal plane of symmetry.

20. A fluidic oscillator according to claims 12 and 19, characterized in that both ultrasound transducers are secured to the same one of the walls (28, 30) defining the passage for the fluid.

21. A fluidic oscillator according to any one of claims 1 to 18, characterized in that the ultrasound transducers (52, 54) are offset in a direction perpendicular to the longitudinal direction of fluid flow and contained in the longitudinal plane of symmetry.

22. A fluidic oscillator according to claims 12 and 21, characterized in that each ultrasound transducer (52, 54) is secured to a respective one of the walls (28, 30) defining the passage for the fluid.

23. A method of measuring a volume-related quantity of a fluid flowing through a fluidic oscillator in which a jet of fluid oscillates transversely about a longitudinal plane of symmetry (P), said method consisting successively in:

   - emitting an ultrasound signal into the fluid flow from an ultrasound transducer;
   - receiving said ultrasound signal as modulated by the oscillations of the jet of fluid by using another ultrasound transducer; and
   - processing the received signal so as to determine said volume-related quantity of the fluid that has flowed through the oscillator;

   the method being characterized in that it consists in emitting an ultrasound signal in a direction that is substantially contained in the longitudinal plane of symmetry (P).

24. A method according to claim 23, characterized in that said method consists in emitting the ultrasound signal in the flow direction of the fluid flowing through the fluidic oscillator.

25. A method according to claim 23 and 24, characterized in that after receiving the ultrasound signal and on the basis of said ultrasound signal, the method consists in detecting a frequency of oscillation that is equal to twice the frequency of oscillation of the jet of fluid, thereby making it possible to improve measurement sensitivity.

26. A method according to claim 23, characterized in that said method consists in emitting an ultrasound signal in the opposite direction to the flow direction of the fluid through the fluidic oscillator.

27. A method according to any one of claims 23 to 26, characterized in that for small volume-related quantities of fluid flowing through the fluidic oscillator, said method consists successively in :

   - emitting an ultrasound signal from one of the transducers towards the other in a direction that is substantially contained in the longitudinal plane of symmetry (P);
   - receiving said ultrasound signal whose speed of propagation has been modified by the flow of the fluid;
   - determining a first value of a magnitude characteristic of said speed of propagation of the received ultrasound signal;
   - repeating the above steps after interchanging the emitter and receiver functions of the ultrasound transducers and determining a second value for said magnitude characteristic of the speed of propagation for another ultrasound signal; and
   - deducing therefrom the measurement of a small volume-related quantity of the fluid.

28. A method according to claim 27, characterized in that the magnitude characteristic of the propagation speed of the ultrasound signal is the propagation time of said signal.

29. A method according to claim 27, characterized in that the magnitude characteristic of the propagation speed of the ultrasound signal is the phase of said signal.

30. The use of a fluidic oscillator according to any one of claims 1 to 22 and a measurement method according to any one of claims 23 to 29 for measuring a volume-related quantity of a gas.

EP 0 835 385 B1

FIG.1

FIG.2

**FIG.3**

**FIG.4**

FIG.5

FIG.6

FIG.7

EP 0 835 385 B1

FIG.8

FIG.9

FIG.10

EP 0 835 385 B1

FIG.11

EP 0 835 385 B1

Amplitude

FIG.12

Amplitude

FIG.13

Amplitude

FIG.14

Amplitude

FIG.15

FIG.16

FIG. 17

EP 0 835 385 B1